(19) Europäisches Patentamt
European Patent Office
Office européen des brevets

(11) **EP 2 405 400 A2**

(12) **EUROPÄISCHE PATENTANMELDUNG**

(43) Veröffentlichungstag:
**11.01.2012 Patentblatt 2012/02**

(51) Int Cl.:
***G06T 7/40*** *(2006.01)*

(21) Anmeldenummer: **11090001.6**

(22) Anmeldetag: **31.05.2011**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **07.07.2010 DE 102010026700**

(71) Anmelder: **Deutsches Zentrum für Luft- und
Raumfahrt e. V.
51147 Köln (DE)**

(72) Erfinder: **Hetzheim, Hartwig
12439 Berlin (DE)**

(74) Vertreter: **Patentanwälte Bressel und Partner
Potsdamer Platz 10
10785 Berlin (DE)**

(54) **Verfahren und Vorrichtung zur Detektion mindestens eines Bildobjekts**

(57) Die Erfindung betrifft ein Verfahren und eine Vorrichtung zur Detektion mindestens eines Bildobjekts mit vorbekannten Textureigenschaften in einem Originalbild (OB), wobei auf das Originalbild (OB) in einem ersten Teil des Verfahrens in einer ersten Operationskette (OK1) eine erste Operation (O1) und mindestens eine weitere Operation angewendet wird, wobei die mindestens eine weitere Operation von der ersten Operation (O1) verschieden ist, wobei nach jeder Operation (01, 02, 03,..., On) ein Zwischenbild (ZB1, ZB2, ZB3) erzeugt wird, wobei die mindestens eine weitere Operation aus einer Menge von mindestens zwei verschiedenen Operationen ausgewählt wird, wobei die Auswahl der mindestens einen weiteren Operation in Abhängigkeit einer Auswertung mindestens eines der bereits erzeugten Zwischenbilder (ZB1, ZB2, ZB3) und/oder des Originalbildes (OB) erfolgt,

wobei die Anwendung von weiteren Operationen abgebrochen wird, falls mindestens ein vorbestimmtes Abbruchkriterium erfüllt ist,

wobei in einem zweiten Teil des Verfahrens ein allgemeines Texturbild (W1, W2, ..., Wn) aus dem zuletzt erzeugten Zwischenbild (V1) erzeugt wird, indem mindestens eine Texturfläche des zuletzt erzeugten Zwischenbildes (V1) bestimmt wird, wobei Textureigenschaften des zuletzt bestimmten Zwischenbilds (V1) bestimmt werden, wobei der mindestens einen Texturfläche ein Teil oder Teile des zuletzt bestimmten Zwischenbildes (V1) zugeordnet werden, der oder die gleiche oder ähnliche Textureigenschaften aufweisen,

wobei in einem dritten Teil des Verfahrens Textureigenschaften der mindestens einen Texturfläche mit vorbekannten Textureigenschaften verglichen werden, wobei das Bildobjekt mit vorbekannten Textureigenschaften detektiert wird, falls Textureigenschaften von der mindestens einen Texturfläche gleich oder ähnlich den vorbekannten Textureigenschaften sind.

Fig. 1

**Beschreibung**

Die Erfindung betrifft ein Verfahren und eine Vorrichtung zur Detektion mindestens eines Bildobjekts mit vorbekannten Textureigenschaften in einem Originalbild.

Es gibt eine Reihe von Anwendungen, bei denen eine innere Struktur eines Objekts mit Hilfe eines Strahles, der ein untersuchendes Objekt durchdringt, abgebildet werden kann. Hierbei wird von einer interessierenden Struktur eines Objekts mit einem Messstrahl ein über alle durchdrungenen Schichten des zu untersuchenden Objekts (Schnittschichten, rohrförmiger Bereich oder Schnittkegel) aufsummiertes Signal geliefert. Aus diesem Signal kann mittels bekannter Verfahren ein Originalbild erzeugt werden, in welchem die interessierende innere Struktur als Bildobjekt dargestellt ist. Normalerweise sind aber nur einzelne Bereiche oder nur bestimmte Schichten innerhalb des untersuchten Objekts von Interesse.

Die Erzeugung des Originalbildes kann hierbei z.B. mit Hilfe von Röntgenstrahlen, Lasern, Ionenstrahlen oder Ultraschall durchgeführt werden. Auch die Schallausbreitung nach einem künstlich erzeugten Explosionsfeld ist ein Beispiel für ein Verfahren zur Erzeugung des Originalbildes. Bei einer MRT (Magnetresonanztomographie)-Anwendung wird die Fouriertransformierte der Larmor-Frequenz eines angeregten Atoms (z.B. Wasserstoff oder Kohlenstoff) durch eine Modulation von Radiofrequenzen untersucht. Empfangen werden die entstandenen elektromagnetischen Signale mit einer Spule und so werden die Unterschiede der einzelnen Objektschichten punktweise abgetastet und können dann bildlich in einem Originalbild dargestellt werden. Auch bei diesem Verfahren überlagern sich Effekte aller Schichten des Objekts und es besteht eine Analogie zur Erzeugung von Originalbildern mittels Röntgenstrahlen.

Ist a priori bekannt, welches Bildobjekt von Interesse ist, so besteht eine Aufgabe darin, das Originalbild hinsichtlich des Bildobjekts zu untersuchen und festzustellen, ob ein von der gesuchten Struktur erzeugtes Bildobjekt im Originalbild enthalten ist und falls ja, an welcher Stelle und mit welcher Größe. Hierbei kann angenommen werden, dass Bildeigenschaften des Bildobjekts a priori bekannt sind. Ein Problem ist, dass das erzeugte Originalbild neben dem Anteil von der gesuchten inneren Struktur auch Anteile enthält, die, z.B. aus Sicht eines Detektors, vor oder hinter der gesuchten inneren Struktur liegen. Z.B. kann die gesuchte innere Struktur auch nur eine einzige Schicht sein, wenn man sich das untersuchte Objekt in Schichten aufgeteilt denkt. Hierbei besteht das Problem darin, spezifische Anteile, die von der gesuchten inneren Struktur stammen, nachzuweisen oder auch deren Fehlen zu belegen.

Eine solche Problematik besteht in vielen Bereichen der Bildverarbeitung, insbesondere der medizinischen Bildverarbeitung, in der Materialprüfung oder bei der Suche nach Öl auf Basis seismischer Bilder.

Da eine Hauptanwendung in der medizinischen Bildverarbeitung liegt, wird im Folgenden stellvertretend dieses Problemfeld behandelt. Selbstverständlich lässt sich die offenbarte Lehre auch auf andere Anwendungsfelder der Bildverarbeitung übertragen.

In der medizinischen Bildverarbeitung ist es oft schwierig, interessierende Strukturen, die durch ausgewählte Gewebe- oder Zellstrukturen erzeugt wurden, in so genannten Schichtbildern aufzufinden. Solch ausgewählte oder interessierende Gewebe- oder Zellstrukturen können z.B. Tumorgewebe sein. Auch die Unterscheidung zwischen Geweben mit ähnlicher bildlicher Darstellung, z.B. ähnlicher Textur, wie Nerven und Tumore oder Nerven und Bandscheiben oder auch Nerven und Bänder oder die Unterscheidung zwischen Zyste und Tumor beinhaltet eine ähnliche Problemstellung. Da jede Gewebeart eine spezifische Struktur aufweist bzw. in einer spezifischen Art und Weise abgebildet wird, ist es wünschenswert festzustellen, ob z.B. Tumorgewebe vorhanden ist oder nicht. Hierbei ist insbesondere problematisch, dass sich z.B. Texturen zweier Gewebearten oft nur wenig voneinander unterscheiden. So unterscheiden sich z.B. Krebszellen und normale Gewebezellen nur schwach über z.B. die Größe und Gestalt der Zellen und deren Zellkern. Auch Nervenzellen unterscheiden sich in der Regel nur schwach von benachbarten Zellen. Weiter kommt erschwerend hinzu, dass in den Bildpunkten von so genannten Schichtaufnahmebildern auch die Informationen von, aus Sicht des bilderzeugenden Strahls, vorhergehenden Schichten oder Regionen und der nachfolgenden Schichten oder Regionen enthalten sind, die regelmäßig keinen interessierenden Beitrag leisten. Hinzukommt weiterhin, dass nach dem Durchdringen der folgenden Schichten auch eine gewisse Überlagerung mit Veränderungen der ursprünglich interessierenden Schichten oder Regionen entsteht. Derartige Überlagerungen sind nur schwer wieder aufzuschlüsseln. Es kann hierbei eine Art Modulation entstehen, so dass man neben einem additiven Anteil auch einen multiplikativen Anteil hat, der durch Lokalschwächung oder Verstärkung in den nachfolgenden Schichten entsteht.

In der medizinischen Bildverarbeitung besteht z.B. eine Aufgabe in dem Auffinden von Gewebe- oder Zellstrukturen, wie z.B. Krebs, Nervenzellen usw.. Derartige Gewebe- oder Zellstrukturen können mittels der vorhergehend erwähnten Verfahren als Teil eines Originalbildes abgebildet werden. Die durch das Abbilden dieser Gewebe- oder Zellverbände erzeugten Bildobjekte weisen hierbei spezifische Texturen auf. Es besteht also die Möglichkeit, mittels einer Analyse von Texturen diejenigen Bildanteile oder Bildobjekte aufzufinden, die durch die zu detektierenden Gewebe-oder Zellstrukturen bedingt sind. Nach heutigem Stand der Technik können Bilder mit einer großen Anzahl von Grauwerten dargestellt werden. So können z.B. Grauwert-Auflösungen von 12 Bit und höher erreicht werden. Bei einer Auflösung von 12 Bit kann man mit einer Grauwertskala von mehr als 4.000 Grauwerten arbeiten. Bei Berücksichtigung aller unmittelbaren Nachbarpixel, d.h. drei Nachbarpixel in alle acht Richtungen für eine Beschreibung einer örtlich eng begrenzten Textur, hat man somit etwa eine Millionen Grauwertniveaus zum Vergleich und damit zur Bestimmung einer Textur zur Verfügung. Im Allgemeinen wird das Hervorheben von spezifischen Texturen mittels einer Anwendung von Methoden der Bildverarbeitung, im Folgenden auch Operationen genannt, auf das Originalbild realisiert. Hierbei wird im Allgemeinen nur eine einzelne Operation auf das Originalbild angewendet. Es handelt sich bei den bisherigen Verfahren um Bildverbesserung, Bildverstärkung, Kontrastverstärkung usw. Hierbei können Verfahren mit zellularen neuronalen Netzwerken (CNN) arbeiten, um Bildstrukturen hervorzuheben, wie z.B. in "Paolo Arena, Adriano Basile, Maide Bucolo, Luigi Fortuna: Image processing for medical diagnosis using CNN, Nuclear Instruments and Methods in Physics Research A 497 (2003), 174-178" offenbart. Es werden auch Expertensysteme verwendet, um gewisse Strukturen in einem Originalbild zu finden, wie z.B. in "Samuel W. K. Chan, K. S. Leung, W. S. Felix Wong: An expert system for the detection of cervical cancer cells using knowledge-based image analyzer, Artificial Intelligence in Medicine 8 (1996), 67-90" offenbart. Weiter bekannt sind Segmentierungsoperationen, die auf morphologischen Klassifikationen, intensitätsbasierten Ansätzen oder z.B. dem so genannten Snake-Modell basieren, wie in "L. L. Caldeira, P. Almeida and J. Seabra: New Evidences on Automatic Tumour Segmentation in Magnetic Resonance Brain Images, IFMBE Proceedings 25/IV, pages 1190-1193, 2009" beschrieben.

Die im Stand der Technik bekannten Verfahren weisen jedoch das Problem auf, dass interessierende Strukturen eines Objekts nicht mit einer gewünschten Genauigkeit und Zuverlässigkeit detektiert werden können.

Es stellt sich daher das technische Problem, spezielle Bildobjekte eines Originalbildes mit einer hohen Zuverlässigkeit und einer hohen Genauigkeit zu detektieren. Insbesondere stellt sich auch das technische Problem, ein Verfahren und eine Vorrichtung zu schaffen, die eine genaue und zuverlässige Detektion von Bildobjekten erlaubt, wobei wenig Rechen- und Speicherkapazität benötigt wird.

Die Lösung des technischen Problems ergibt sich aus den Gegenständen mit den Merkmalen der Ansprüche 1 und 14. Weitere vorteilhafte Ausgestaltungen der Erfindung ergeben sich aus den Unteransprüchen.

Vorgeschlagen wird ein Verfahren zur Detektion mindestens eines Bildobjekts mit vorbekannten Textureigenschaften in einem Originalbild. Hierbei kann das Originalbild mit Hilfe verschiedenster bilderzeugender Verfahren erzeugt werden. Beispielsweise kann das Originalbild ein so genanntes Computertomogramm (CT)-Bild oder ein MRT-Bild sein. Insbesondere eignet sich das erfindungsgemäße Verfahren zur Detektion mindestens eines Bildobjekts in einem Originalbild, welches durch ein Tomographie- oder Schnittbild-oder Schichtaufnahmeverfahren erzeugt wurde.

Das erfindungsgemäße Verfahren gliedert sich in drei Teile.

In einem ersten Teil des Verfahrens werden auf das Originalbild in einer ersten Operationskette eine erste und mindestens eine weitere Operation angewendet. Hierbei ist die mindestens eine weitere Operation von der ersten Operation verschieden. Als Operationen werden hierbei Methoden der Bildverarbeitung bezeichnet. Vorzugsweise eignen sich die Operationen zum Hervorheben elementarer Textureigenschaften in einem Bild. Als Operationen dienen z.B. nichtlineare Filterungen mit unterschiedlichen Parametern und Nichtlinearitäten, Lee-Filterungen, verschiedene Digitalfilterungen, Smoothing-Algorithmen, Rank-Algorithmen, Median-Filterung, morphologische Operationen, Gradientenbildung, höhere Ableitungen der Bildinformationen, Verkopplung mit den höheren Momenten eines Bildes (Skewness, Kurtosis, Mean absolut deviation), Anwendung von Prozeduren auf Basis von Waveletbearbeitung mit nachfolgender Rücktransformation usw.. Selbstverständlich sind dem Fachmann weitere geeignete Operationen bekannt.

Wesentlich ist, dass jede Operation mindestens einen Parameter aufweist, wobei ein Ergebnis der Anwendung der Operation abhängig von dem Wert des mindestens einen Parameters ist.

Vor dem ersten Teil können die Bilder auch mittels Voroperationen vorverarbeitet werden, bevor die vorhergehend genannten Operationen zur Hervorhebung von Textureigenschaften angewandt werden. Solche Voroperationen sind z.B.:

- Zerlegung des Bildes in binäre Einzelbilder und Zusammensetzung mit anderer Wichtung oder Aussondern (Nullsetzen) von einem oder mehreren elementaren Binärbildern, aus denen das Originalbild zusammengesetzt ist,
- Einführung von Schwellen, wobei z.B. Bildinhalte unterhalb, oberhalb oder zwischen Schwellen unterdrückt werden,
- Erzeugung von Differenzbildern zwischen einem unverschobenen Bild und einem um einen oder mehrere Pixel in verschiedene Richtungen mit allen Winkeln verschobenen Bild,
- Histrogram-Equalisation über das Bild,
- Watershed-Prozeduren, um gleichartige Bildteile zusammenzufassen.

Selbstverständlich sind auch hierbei dem Fachmann weitere geeignete Voroperationen bekannt.

Hierbei wird nach jeder Operation ein Zwischenbild erzeugt. Die vorhergehend genannten Operationen und/oder Voroperationen können hierbei auf das Originalbild und/oder die erzeugten Zwischenbilder angewendet werden. Dass die erste und die mindestens eine weitere Operation, z.B. eine zweite Operation, verschieden sind, bedeutet hierbei, dass eine erste Operation und eine auf diese erste Operation direkt nachfolgende Operation, in diesem Fall die zweite Operation, von ihrer Art her verschieden sind und/oder mindestens einen sich unterscheidenden Parameter oder einen sich unterscheidenden Wert eines bestimmten Parameters aufweisen. Beispielsweise können die erste und die zweite Operation jeweils eine Mittelwertbildung sein, wobei jedoch die erste Operation einen von der zweiten Operation verschiedenen Kernel aufweist. Nicht direkt aufeinander folgende Operationen in einer Operationskette, z.B. die erste und eine dritte Operation, können dann wieder gleiche oder vorzugsweise sich ebenfalls unterscheidende Parameter aufweisen.

Wie nachfolgend näher erläutert, können die aufeinander folgenden Operationen verschiedenen Klassen von Operationen zugeordnet sein. Auch können die aufeinander folgenden Operationen einer gemeinsamen Klasse zugeordnet sein, jedoch ist in diesem Fall zumindest der Wert des mindestens einen Parameters verschieden.

Eine Auswahl der mindestens einen weiteren Operation erfolgt hierbei in Abhängigkeit einer Auswertung mindestens eines der bereits erzeugten Zwischenbilder, vorzugsweise in Abhängigkeit des zuletzt erzeugten Zwischenbildes. Die Auswertung erfolgt hierbei z.B. hinsichtlich einer Größe von Änderungen zwischen dem Ausgangsbild der zuletzt angewendeten Operation und dem mittels der zuletzt angewendeten Operation erzeugten Zwischenbild.

Die mindestens eine weitere Operation kann z.B. aus einer Menge von mindestens zwei verschiedenen Operationen ausgewählt werden. Hierbei kann also eine Anzahl von Operationen existieren, aus denen eine folgende Operation ausgewählt werden kann. Hierbei kann z.B. eine der mindestens zwei verschiedenen Operationen der gleichen Klasse von Operationen wie die zuletzt angewendete Operation und die weitere der mindestens zwei verschiedenen Operationen einer von dieser Klasse verschiedenen Operation angehören. Auch kann z.B. eine der mindestens zwei verschiedenen Operationen einer ersten Klasse von Operationen angehören, die verschieden von der Klasse der zuletzt angewendeten Operation ist, und die weitere der mindestens zwei verschiedenen Operationen einer weiteren Klasse von Operationen angehören, die verschieden von der Klasse der zuletzt angewendeten Operation und verschieden von der ersten Klasse von Operationen ist.Die Auswahl der mindestens einen weiteren Operation bzw. die Auswahl jeder der ersten Operation folgenden Operationen erfolgt hierbei in Abhängigkeit einer Auswertung mindestens eines der bereits erzeugten Zwischenbilder und/oder des Originalbildes.

Die Reihenfolge von Operationen wird hierbei also über eine Auswertung von Ergebnissen gesteuert, die sich aus den vorher angewandten Operationen ergeben. Ein Vergleich von Ergebnissen vorhergehender Operationen kann dabei genutzt werden, um eine Operation auszuwählen, die geeignet ist, der zuletzt erfolgten Operation nachzufolgen. Somit erfolgt also eine ergebnisorientierte Steuerung der Auswahl von Operationen.

Hierbei kann es möglich sein, dass verschiedene Operationen ähnliche Beiträge oder Ergebnisse liefern, die sich jedoch nicht wesentlich von vorherigen Ergebnissen unterscheiden. Ist ein Beitrag einer Operation nicht ausreichend, eine gesuchte Struktur in einem gewünschten Maße hervorzuheben, so können erfindungsgemäß mehrere Operationen verkoppelt werden, um eine gesuchte Struktur bzw. deren Textur in einem gewünschten Maße hervorzuheben. Somit kann in vorteilhafter Weise eine sicherere Entscheidung über eine Detektion erreicht werden.

Die Anwendung von weiteren Operationen wird abgebrochen, falls mindestens ein vorbestimmtes Abbruchkriterium erfüllt ist.

Das erfindungsgemäße Verfahren beruht hierbei auf verschiedenen Annahmen. Erstens wird angenommen, dass interessierende Strukturen in einem zu untersuchenden Objekt in Schichtbildern als Bildobjekte mit sich von einer Umgebung des jeweiligen Bildobjekts unterscheidenden Texturen dargestellt werden. Hierbei wird z.B. angenommen, dass elementare Zellen, die eine Textur im Schichtbildverfahren generieren, verschieden groß sind, eine verschiedene Gestalt haben, verschieden zueinander angeordnet sind und/oder verschiedene Verteilungen von Absorptionseigenschaften haben. Auch innere Strukturen der Zellen, beispielsweise Zellkerne, können unterschiedlich sein. Hiermit unterscheiden sich zumindest die Texturen der Bildobjekte in Relation zu den unmittelbaren Nachbarpunkten im Bild.

Weiter wird davon ausgegangen, dass sich zumindest in Schichtbildern Effekte aus einer Überlagerung von einzelnen Schichten bilden. Um einen Beitrag jeder einzelnen Schicht zu bestimmen und in einem Originalbild zu kompensieren, wäre es erforderlich, diesen Beitrag und die Lage der einzelnen Schichten a priori zu kennen. Da dies nicht möglich ist, dient das Originalbild, also der Summenwert über alle Schichten, als Eingangsbild für das erfindungsgemäße Verfahren, wobei mit Hilfe von iterativ angewendeten Operationen, die besonders sensitiv auf vorbestimmte Textureigenschaften oder Texturunterschiede reagieren, das zu detektierende Bildobjekt hervorgehoben wird. Hierbei sollten nicht interessierende Regionen möglichst unterdrückt oder in ihrem Effekt abgeschwächt werden. Da a priori keinerlei Informationen über eine Lage und/oder einen Inhalt von Schichten in Schichtbildern vorhanden ist, kann auch über eine Variation von Operationen bzw. eine Permutation einer Reihenfolge von Operationen versucht werden, das Bildobjekt zu detektieren. Dieses wird später weitergehend ausgeführt.

Die zum Auffinden des Bildobjekts hauptsächlich genutzten Bildeigenschaften sind die Textureigenschaften, die nur in dem Teil des Originalbildes vorhanden sind, welches durch das interessierende Objekt erzeugt wurde. In weiteren Teilen des Originalbildes sind diese spezifischen Textureigenschaften nicht oder nur schwach vorhanden. Eine Textur ist hierbei i.d.R. unabhängig von einem mittleren Grauwert (Helligkeit) in einem Bild oder Teil des Bildes. In mittels Schichtaufnahmeverfahren erzeugten Bildern wird in einer Schicht oder in einem Volumen das jeweils durchdringende Signal (z.B. Schall, Röntgenstrahlen, Laserstrahlen oder die Spin-Drehung) derart moduliert, dass in dem so erzeugten Bild das jeweilige Objekt mit bestimmten Textureigenschaften abgebildet wird. Das Originalbild entsteht meist über eine punktweise Abtastung des Objekts. Durch eine Betrachtung der Textur, die mathematisch als Stochastik definiert ist, können z.B. Grauwert-Beziehungen eines betrachteten Pixels zu benachbarten Pixeln einbezogen und z.B. die Grauwerte dieser Punktmenge und deren Beziehung zueinander berücksichtigt werden. D.h., dass bei einem durch eine gegebene Textur aufgespannten riesigen Ereignisraum von Nachbarbeziehungen diese gesuchte Eigenschaft sich von den anderen unterscheiden wird und damit aufgefunden werden kann.

Die Grauwerte eines jeden Pixels des Originalbildes setzen sich hierbei aus der Summe von Effekten aller durchdrungenen Schichten zusammen. Dies bedeutet, dass ein Teil der Textureigenschaften des interessierenden Bildobjekts in dem Summenwert von allen anderen Beiträgen unverändert vorhanden oder nur schwach verändert ist. Dieser Beitrag kann über die vorgeschlagene Iteration von verschiedenen Operationen isoliert werden.

Z.B. wird nach Anwendung der ersten Operation auf das Originalbild ein erstes Zwischenbild generiert, in welchem nur Teile mit gewissen, beispielsweise vorbestimmten, Textureigenschaften hervorgehoben oder enthalten sind. Die mindestens eine weitere Operation weist zumindest einen Unterschied in mindestens einem Parameter zur ersten Operation auf. Diese mindestens eine weitere Operation wird auf das erste Zwischenbild angewendet, wodurch ein zweites Zwischenbild entsteht, welches wiederum andere Texturmerkmale hervorhebt oder enthält. Dieses Verfahren wird iterativ fortgesetzt.

Das oder die Zwischenbilder enthalten hierbei nur noch Informationen über Bildeigenschaften und nicht mehr notwendigerweise eine visuell anschauliche Information.

Die Zwischenbilder können hierbei zusätzlich mit dem Originalbild verknüpft werden, um ein resultierendes Zwischenbild zu erhalten, wobei auf das resultierende Zwischenbild dann eine folgende Operation angewendet wird. Die Verknüpfung kann hierbei z.B. eine multiplikative, additive oder logische Verknüpfung (z.B. AND, OR, XOR) sein. Auch können verschiedene Zwischenbilder über eine derartige Verknüpfung miteinander verknüpft werden. Hierdurch können z.B. Details des Originalbildes oder eines Zwischenbildes erhalten werden, die durch eine Operation unterdrückt wurden, jedoch weiterhin erhalten bleiben sollen. Selbstverständlich ist auch eine Kombination von Verknüpfungen vorstellbar.

Zum Auffinden des Bildobjekts werden im erfindungsgemäßen Verfahren vorzugsweise zwei verschiedene Arten von Operationen angewendet. Eine erste Art von Operationen wird in Abhängigkeit einer Intensitätsbeziehung von benachbarten Pixeln angewendet, während eine zweite Art von Operationen in Abhängigkeit von Intensitätsbeziehungen zwischen einem Pixel und weiteren Pixeln eines örtlichen Bereichs um den betrachteten Pixel herum angewendet wird. Hierbei kann der örtliche Bereich auch Pixel umfassen, die nicht unmittelbare Nachbarpixel des jeweiligen Pixels sind. Abhängig von der Art von Operationen können diese Operationen verschiedenen Klassen von Operationen zugeordnet sein.

Für die mittels der iterativen Anwendung von Operationen erfolgende Texturanalyse ist eine Ordnung bzw. Reihenfolge der Operationen wichtig. Hierbei ist insbesondere entscheidend, welche Operationen in welcher zeitlichen Reihenfolge kombiniert werden und in welche Bildrichtungen von jedem Pixel aus gearbeitet wird. Hiermit lassen sich in vorteilhafter Weise Beiträge von interessierenden Schichten, die das Originalbild erzeugen, zumindest teilweise isolieren.

Eine Bestimmung einer Reihenfolge von Operationen kann hierbei in Abhängigkeit einer Ordnung von Operationen erfolgen. Ein Ordnungsprinzip kann hierbei z.B. eine pixelbezogene Reichweite einer Wirkung der Operationen sein, d.h. die Größe der Wechselwirkung von einzelnen Pixeln in Abhängigkeit einer pixelbezogenen Entfernung zu einem aktuell betrachteten Pixel. Zuerst können also Operationen angewendet werden, die, ausgehend von einem aktuell betrachteten Pixel, in alle Bildrichtungen eine weitreichende Wechselwirkung haben, vorzugsweise also nur mit weit entfernten Pixeln in Wechselwirkung treten. Hierzu können z.B. auf das Originalbild oder ein Zwischenbild Operationen angewendet werden, die so genannten grobe Textureigenschaften filtern, insbesondere hervorheben. Eine weitreichende Wechselwirkung kann beispielsweise bei um fünf oder mehr Pixel von dem aktuell betrachteten Pixel entfernten Pixeln angenommen werden.

Um spezifische Beiträge einzelner Operationen isoliert verarbeiten zu können, können die nach einer Anwendung einer Operation erhaltenen Ergebnisse, insbesondere das erhaltene Zwischenbild, von einem vorher erhaltenen Zwischenbild oder dem Originalbild subtrahiert werden.

Zur Bestimmung von Veränderungen oder Beiträgen durch einzelne Operationen können auch Vergleiche zwischen dem Zwischenbild und einem vorher bestimmten Zwischenbild oder dem Originalbild über eine AND-Verknüpfung (Maß für eine Gleichheit von aufeinanderfolgenden Zwischenbildern oder von Teilen von aufeinanderfolgenden Zwischenbildern), über Ähnlichkeitsvergleiche oder über eine Bestimmung und Auswertung von verschiedenen, jedoch nicht-orthogonalen, Eigenschaften in den Bildern durchgeführt werden. Hierbei bezeichnen Ähnlichkeitsvergleiche eine Auswertung von mathematischen Ähnlichkeitsmaßen wie z.B. einer Korrelation zwischen einem Ausgangsbild und einem verschobenen oder vergrößertem oder verkleinertem Ausgangsbild. Bei der Bestimmung und Auswertung von verschiedenen, nicht-orthogonalen Eigenschaften wird beispielsweise in dem vorher bestimmten Zwischenbild eine Textureigenschaft und in dem aktuellen Zwischenbild eine weitere Textureigenschaft bestimmt, die nicht unabhängig, also nicht orthogonal, zu der im vorher bestimmten Zwischenbild bestimmten Textureigenschaften ist. Beispielsweise kann im vorher bestimmten Zwischenbild ein Rang eines Pixels bezüglich einer Anzahl von benachbarten Pixeln und in dem aktuellen Zwischenbild eine Differenz zwischen einem über die Anzahl von benachbarten Pixeln bestimmten Mittelwert und dem Originalwert des Pixels bestimmt werden. Diese beiden Eigenschaften sind hierbei nicht unabhängig voneinander und ein Vergleich dieser Eigenschaften oder eines sich über die Zwischenbilder ergebenden Verlaufs kann so auch zur Bestimmung von Veränderungen genutzt werden.

Hierbei kann ein Rang $R_{i,j}$ an einem betrachteten Pixel (i,j) wie folgt berechnet werden:

$$R_{i,j}(M,N) = \sum_{l=-M}^{M} \sum_{k=-N}^{N} u\left(x_{i,j} - x_{l,k}\right)$$   Formel 1,

wobei M und N eine Anzahl von Pixel darstellen und eine Rechteck-Region eines Bildes definieren. Weiter stellt u(z) eine Sprungfunktion dar, die wie folgt definiert ist:

$$u(z) = \begin{cases} 0 & for \quad z < 0 \\ 1 & for \quad z \geq 0 \end{cases}$$   Formel 2.

Auch können über eine Differenzbildung von Zwischenbildern, die über gleichartige Operationen mit verschiedenen Parametern erhalten wurden, gewünschte Textureigenschaften isoliert werden. Derartige Differenzbildungen können hierbei auch für nicht unmittelbar aufeinander folgende Zwischenbilder angewendet werden.

Durch das erfindungsgemäße Verfahren lässt sich in vorteilhafter Weise eine Folge von Operationen finden, die vorzugsweise voneinander unabhängige Beiträge liefern bzw. voneinander unabhängige Textureigenschaften im Originalbild filtern. Hierdurch können Bildteile mit so genannten elementaren Textureigenschaften (Elementar-Texturen) generiert werden, die zur Detektion des gewünschten Bildobjekts dann wiederum näher untersucht werden.

Nach der Anwendung von Operationen mit weitreichender Wechselwirkung können Operationen angewendet werden, die feinere, also kurzreichende, Wechselwirkungen haben. Im erfindungsgemäßen Verfahren sollte vorzugsweise sichergestellt werden, dass eine ausreichend große Anzahl von Operationen mit unterschiedlicher Reichweite von Wechselwirkungen angewendet wird. Eine kurzreichende Wechselwirkung kann beispielsweise bei um ein Pixel bis vier Pixel von dem aktuell betrachteten Pixel entfernten Pixeln angenommen werden.

Zum Hervorheben von Textureigenschaften, insbesondere von in Schichtbildern versteckten, d.h. modulierten, Textureigenschaften, werden z.B. die folgenden Schritte oder Operationen durchgeführt, wobei für jeden Pixel eines Original- oder Zwischenbildes in dem jeweiligen Schritt oder in der jeweiligen Operatione ein Pixel eines abgeleiteten Bilds erzeugt wird:

- Bildung einer Differenz eines Grauwertes eines betrachteten Pixels mit den unmittelbaren Nachbarpixeln (z.B. 8 Nachbarpixel) und Zuweisung einer Summe dieser Differenzen auf diesen betrachteten Pixel;
- Bildung eines Vorzeichens der Differenz von einem betrachteten Pixel zu den unmittelbaren Nachbarpixeln, Addition der Vorzeichen und Zuweisung dieses Wertes auf den betrachteten Pixel;
- Bildung einer Abweichung eines Grauwerts eines unmittelbaren Nachbarpixels des betrachteten Pixels von dem über alle Nachbarpixel ermittelten Mittelwert und Zuweisung dieser Abweichung auf den betrachteten Pixel;
- Verkopplung z.B. einer Addition und/oder Subtraktion und/oder logischen Verknüpfung eines mittleren Grauwerts der Umgebung (vorzugsweise mindestens 16 Nachbarpixel) eines betrachteten Pixels mit einer Variation von Grauwerten der benachbarten Pixel und Zuweisung des Ergebnisses auf den betrachteten Pixel;
- Berechnung eines Rangs eines betrachteten Pixels bezüglich einer Umgebung des betrachteten Pixels und Zuweisung einer Summe auf den betrachteten Pixel;
- Berechnung von Differenzen von verschieden gefilterten Originalbildern, Zwischenbildern oder einer Kombination von Original- und Zwischenbildern.

Auch können das Originalbild und/oder verschiedene Zwischenbilder mittels logischer Operationen (AND, XOR, OR) und algebraischer Verknüpfungen (Addition, Subtraktion, Multiplikation) zu einem resultierenden Zwischenbild zusammengefasst werden.

Die Anwendung sich unterscheidender Operationen dient hierbei einer Schätzung einer Inversen der unbekannten Funktion, die einen Einfluss der verschiedenen Schichten, die von dem das Ausgangssignal erzeugenden Strahl durchdrungenen werden, abbildet, wobei eine Anwendung der Inversen auf das Ausgangssignal, beispielsweise das Originalbild, unter anderem Bildbereiche mit den gesuchten Bildobjekten mit vorbekannten Textureigenschaften isoliert oder hervorhebt. Hierbei bildet die Anzahl und/oder die Reihenfolge der Operationen inverse Funktionen zu den Effekten ab, die einen Teil der das Ausgangssignal erzeugen, beispielsweise eine Streuung und/oder eine Beugung und/oder eine Brechung durch die verschiedenen Schichten.

Die Anwendung von Operationen kann hierbei auf einen vorbestimmten Teilbereich des Originalbildes und korrespondierende Teilbereiche der Zwischenbilder beschränkt werden. Die vorbestimmten Teilbereiche können beispielsweise durch eine Vor-Segmentierung bestimmt werden. Hierdurch können Bildobjekte nur in bestimmten Bildbereichen gesucht werden, beispielsweise nur Bildbereichen, die eine zu untersuchenden Struktur abbilden.

In einem zweiten Teil des Verfahrens wird ein allgemeines Texturbild aus dem zuletzt erzeugten Zwischenbild erzeugt, indem mindestens eine Texturfläche des zuletzt erzeugten Zwischenbildes bestimmt wird, wobei Textureigenschaften des zuletzt bestimmten Zwischenbilds bestimmt werden und der mindestens einen Texturfläche ein Teil oder Teile des zuletzt bestimmten Zwischenbildes zugeordnet werden, der oder die gleiche oder ähnliche Textureigenschaften aufweisen. Eine Texturfläche bezeichnet hierbei eine Gesamtheit von in einem Bild isolierten Flächen mit gleichen oder ähnlichen Textureigenschaften.

Das allgemeine Texturbild ist hierbei ein Bild, in welchem ein oder mehrere Teile des resultierenden Zwischenbildes, die gleiche oder ähnliche Textureigenschaften aufweisen, einheitlich codiert sind und somit auch einheitlich dargestellt werden können. Allen einzelnen Gebieten oder Teilen, denen durch die vorhergehend angeführten Operationen unterschiedliche Textureigenschaften zuzuordnen sind, kann z.B. eine vorbestimmte Graustufe zugeordnet werden. Ähnlich bedeutet hierbei, dass Textureigenschaften nur in einem vorbestimmten Maße voneinander abweichen.

In einem dritten Teil des Verfahrens werden Textureigenschaften der mindestens einen im zweiten Teil des Verfahrens bestimmten Texturfläche mit vorbekannten Textureigenschaften verglichen, wobei ein Bildobjekt mit vorbekannten Textureigenschaften detektiert wird, falls Textureigenschaften von der mindestens einen Texturfläche gleich oder ähnlich den vorbekannten Textureigenschaften sind.

Hierbei können die vorbekannten Textureigenschaften Textureigenschaften vorbestimmter Bildobjekte sein, wobei diese Bildobjekte z.B. in Testbildern z.B. durch einen Experten festgelegt bzw. segmentiert werden können. Die Detektion eines gesuchten Bildobjekts im Originalbild wird hierbei technisch durch parametergesteuerte, entscheidungsgerichtete Algorithmen realisiert, die mittels einer Texturanalyse ein in Gebiete gleicher oder ähnlicher Texturen (Texturflächen) aufgelöstes Bild (allgemeines Texturbild) analysieren. Im zweiten Teil des Verfahrens werden also alle Teile mit unterschiedlichen Textureigenschaften klassifiziert, wobei diese Teile im dritten Teil des Verfahrens mit vorbekannten Textureigenschaften verglichen werden. Die Darstellung oder Codierung als verallgemeinertes Texturbild ist hierbei eine effektive Darstellung der aus der iterativen Anwendung von Operationen resultierenden Bilder.

Werden verschiedenen Texturflächen beispielsweise bestimmte Graustufen zugeordnet, so kann bei einer automatischen Auswertung die Verteilung der den Texturflächen zugeordneten Grauwerte in dem Bild nach einer oder mehreren Operationen analysiert werden. Weiter kann nach jeder abgeschlossenen, d.h. beendeten, Operationskette eine Reihenfolge der Operationen sowie gegebenenfalls deren Parametrierung in z.B. einer Speichereinheit gespeichert werden.

Für den dritten Teil des Verfahrens werden Textureigenschaften der Texturflächen, z.B. eine Lage, eine Größe, eine Form und/oder ein Umfang der Texturflächen im allgemeinen Texturbild, bestimmt und gespeichert. Neben den vorhergehend genannten Größen können auch andere Größen als Textureigenschaften der Texturflächen für eine Beurteilung und Zuordnung der Texturflächen wie z.B. Perimeter (Umfang eines isolierten Gebietes), Verhältnis von Umfang zu Fläche (Maß für eine Zerissenheit eines Gebietes), Lage eines Massenschwerpunkts der Fläche, Richtung einer Fläche, die sich aus Trägheitsachsen bei maximalem Trägheitsmoment einer Rotation der Fläche in verschiedenen Richtungen ergeben, die Richtung einer minimalen Trägheitsachse und/oder Symmetrieeigenschaften der Fläche in verschiedene Richtungen bestimmt und gespeichert werden.

Auch kann als Textureigenschaft einer Texturfläche eine Lage der Texturfläche relativ zu weiteren Texturflächen bestimmt werden.

Selbstverständlich können hierbei die Textureigenschaften der Texturflächen gleich den im zweiten Schritt bestimmten Textureigenschaften des zuletzt bestimmten Zwischenbildes sein.

Die genannten Größen sind hierbei nützlich für eine Auswahl von Eigenschaften, um das gesuchte Bildobjekt im allgemeinen Texturbild zu bestimmen.

Für eine visuelle Auswertung kann den verschiedenen Texturflächen auch eine Farbe, z.B. mittels einer Color-Tabelle, zugeordnet werden. Da man 64.000 oder mehr Farben erzeugen kann, ist eine bestimmte Textur durch eine ausgezeichnete Farbe leicht hervorzuheben. Dies unterstützt in vorteilhafter Weise eine visuelle Auswertung des allgemeinen Texturbildes. Speziell ist hierbei darauf zu achten, dass räumlich benachbarte Teile eines Bildes mit gut visuell zu unterscheidenden Farben gekennzeichnet werden.

Weiter können Unterschiede zwischen Textureigenschaften verschiedener Texturflächen im allgemeinen Texturbild als bedeutend oder auch nicht bedeutend markiert werden. Eine Bedeutung kann aus vorbekannten Beispielen oder auch durch Beziehung zwischen Grauwerten von benachbarten Punkten abgeleitet werden. Ist beispielsweise vorbekannt, dass sich Textureigenschaften von abgebildeten Tumorzellen in einer vorbestimmten Art und Weise von gesunden Zellen unterscheiden, so kann, falls ein derartiger Unterschied oder ein ähnlicher Unterschied im allgemeinen Texturbild detektiert wird, dieser Unterschied zwischen entsprechend verschiedenen Texturflächen als bedeutend markiert werden. Die Bedeutung kann hierbei z.B. in Form eines so genannten Bedeutungsparameters gespeichert werden. In Abhängigkeit von diesem Bedeutungsparameter können dann Flächen im allgemeinen Texturbild markiert werden, denen eine gewisse Klasse von Texturen zugeordnet werden kann, z.B. eine Klasse Tumor.

Auch können Ränder von Teilen im allgemeinen Texturbild über so genannte Erode- oder Dilate-Operationen zu Nachbarteilen hinzugezählt oder davon ausgeschlossen werden. Weist z.B. eine Texturfläche Textureigenschaften auf, die ähnlich den Textureigenschaften von abgebildeten Tumorzellen sind, so kann hierdurch entschieden werden, ob eine Umrandung von gesunden Zellen des Tumors bei der Detektion des Tumors mit einbezogen werden soll oder ob sich die Detektion ausschließlich auf Tumorzellen beschränken soll.

Durch das erfindungsgemäße Verfahren kann, insbesondere durch die iterative Anwendung verschiedener Operationen, in vorteilhafter Weise eine genaue und zuverlässige Detektion eines gesuchten Bildobjekts in einem Originalbild erfolgen. Insbesondere gewährleistet das erfindungsgemäße Verfahren, dass die in Schichtbildern vorhandene Störung von Pixeln des gesuchten Bildobjekts durch Beiträge weiterer Schichten reduziert wird. Die Reduktion erfolgt hierbei ohne eine a priori Kenntnis einer Lage und/oder eines Inhalts der Schichten. Durch die ergebnisabhängige Auswahl einer Reihenfolge und einer Art von Operationen wird somit ein einfach zu implementierendes, insbesondere speicher- und rechenleistungsunaufwändiges Verfahren bereitgestellt.

Anschaulich lässt sich das Verfahren wie folgt beschreiben: Insbesondere bei Bildern, die durch mehrere Schichten oder Objekte aufgenommen wurden, kommt es zu einer Aufsummation über alle Schichten, die die Schichtgrenzen im Bild verwischt. Ausgenutzt wird nun, dass stochastische Textur-Eigenschaften über die Schichten erhalten bleiben. Eine Permutation von Operationen ersetzt die Suche in Schichtgrenzen, die unbekannt sind, wobei die Permutationen solange fortgeführt werden, bis eine Übereinstimmung mit einem a priori Wert erreicht ist. Dieser a priori Wert spiegelt das gesuchte Objekt bzw. eine Eigenschaft des Objekts wider. Besonderheiten gegenüber der Umgebung oder Übereinstimmung mit einem Vorbild werden als Ergebnis erwartet, wobei die Suche adaptiv, ergebnisorientiert gesteuert wird. Die beschriebene Permutation (Variation) ersetzt wie ausgeführt die a priori nicht bekannten Grenzen der Schichten (z.B. Gewebeschichten), in denen die auf die Schicht angepassten Texturerkennungs- und Texturverstärkungsoperationen ansetzen müssten. Diese unbekannte Anordnung wird über Variationen der aufeinander folgenden Operationen sichtbar gemacht, da bei einer richtigen Reihenfolge die interessierende Schicht mit ihren Strukturinformationen hervorgehoben wird. Vereinfacht ausgedrückt wird die Schwierigkeit der technischen Aufgabe, über die Summengrauwerte (z.B. CT-Bild) in vielen Einschrittalgorithmen ein Ergebnis über eine bestimmte Schicht zu erhalten (was wegen der Unkenntnis der Schichtgrenzen bzw. zumindest einzelner Schichten große Schwierigkeiten macht), umgeformt in eine andere Problemstellung, die einfacher lösbar ist. Somit besteht die Aufgabe im Auffinden der richtigen Operationen, die eine Umkehrfunktion beschreiben und deren richtige Reihenfolge, d.h. die Operationen stellen die Inversen der überlagernden Schichten dar, so dass durch die Operationen im Ergebnis die Aufsummation rückgängig gemacht wird. Da die richtigen Operationen und deren richtige Reihenfolge nicht a priori bestimmbar sind, wird über eine Permutation diese Möglichkeit herausgefunden, die optimal die Stochastik herausfindet, die das gesuchte Objekt (Gebiet) repräsentiert. Dabei kann wie bereits ausgeführt ein Vergleich mit einem Vorbild oder die gefundene Singularität einer Eigenschaft inmitten einer Umgebung, die abgesucht wird, ausgenutzt werden. Vorzugsweise erfolgt dabei auch eine Permutation der Klassen der Operationen, was später noch näher erläutert wird.

Die vorhergehend beschriebenen Schritte des erfindungsgemäßen Verfahrens, insbesondere die Anwendung verschiedener Operationen im ersten Schritt, kann beispielsweise mittels einer softwaregestützten Recheneinheit oder einer hardwaregestützten Recheneinheit erfolgen. Eine softwaregestützte Recheneinheit bezeichnet hierbei eine mittels Software programmierbare Recheneinheit, z.B. einen Mikrocontroller. Eine hardwaregestützte Recheneinheit beschreibt hierbei eine Recheneinheit, deren Funktionalität durch einen Aufbau und/oder eine Verschaltung der Hardwareelemente festgelegt ist, beispielsweise ein PLA (Programmable Logic Array), ein CPLD (Complex Programmable Logic Device) oder ein FPGA (Field Programmable Gate Array).

In einer weiteren Ausführungsform wird im zweiten Teil des Verfahrens ein allgemeines Texturbild aus einer vorbestimmten Anzahl oder allen Zwischenbildern erzeugt, indem für die vorbestimmte Anzahl oder alle Zwischenbilder jeweils mindestens eine Texturfläche bestimmt wird, wobei der jeweiligen Texturfläche ein Teil oder Teile des jeweiligen Zwischenbildes zugeordnet werden, der oder die gleich oder ähnliche Textureigenschaften aufweisen, wobei Textureigenschaften dieser Texturflächen bestimmt und verknüpft werden, wobei in dem dritten Teil des Verfahrens die verknüpften Textureigenschaften mit den vorbekannten Textureigenschaften verglichen werden, wobei das Bildobjekt mit vorbekannten Textureigenschaften detektiert wird, falls die verknüpften Textureigenschaften gleich oder ähnlich den vorbekannten Textureigenschaften sind.

Hierbei kann also ein Bildobjekt mit vorbekannten Textureigenschaften in vorteilhafter Weise detektiert werden, falls verknüpfte Textureigenschaften von in den bestimmten Zwischenbildern und nicht allein Textureigenschaften von Texturflächen im zuletzt bestimmten Zwischenbild gleich oder ähnlich den vorbekannten Textureigenschaften sind.

Hierbei können Textureigenschaften von in den Zwischenbildern bestimmten Texturflächen und gegebenenfalls Textureigenschaften von in dem Originalbild bestimmten Texturflächen bestimmt und verknüpft und diese verknüpften Textureigenschaften von Texturflächen zur Bestimmung eines Ähnlichkeitsmaßes mit den vorbekannten Textureigenschaften der gesuchten Bildobjekte genutzt werden, wobei das Bildobjekt mit vorbekannten Textureigenschaften detektiert wird, falls das Ähnlichkeitsmaß größer als ein vorbestimmter Schwellwert ist. Hierbei können also die aus verschiedenen Zwischenbildern und gegebenenfalls dem Originalbild resultierenden Texturbilder verknüpft werden, und bezüglich ihrer Ähnlichkeit innerhalb vorgegebener Grenzen untersucht werden.

Für die Bestimmung der Ähnlichkeiten von Texturflächen zweier verschiedener Texturbilder oder Ähnlichkeiten von Textureigenschaften wird auf nachfolgende Erläuterungen zur Bestimmung der Ähnlichkeiten von Texturflächen zweier verschiedener allgemeiner Texturbilder oder Ähnlichkeiten von Textureigenschaften von Texturflächen eines oder mehrerer allgemeiner Texturbilder mit vorbekannten Textureigenschaften verwiesen, wobei z.B. Abstände, insbesondere eine so genannte Hamming-Distance im Raum von aufgespannten Eigenschaften, benutzt werden kann.
In einer weiteren Ausführungsform erfolgt die Auswahl einer Operation in Abhängigkeit mindestens eines Unterschiedes oder einer Änderung zwischen einer Auswertung eines bereits erzeugten Zwischenbildes und eines weiteren bereits erzeugten Zwischenbildes oder einer Auswertung eines bereits erzeugten Zwischenbildes und des Originalbildes. Insbesondere erfolgt die Auswahl in Abhängigkeit einer Größe von Änderungen zwischen dem Ausgangsbild der zuletzt angewendeten Operation und dem mittels der zuletzt angewendeten Operation erzeugten Zwischenbild. Die Änderungen können hierbei operationsspezifisch und/oder klassenspezifisch und/oder globale Änderungen sein. Eine Auswertung eines Unterschiedes zweier Zwischenbilder oder eines Unterschiedes eines Zwischenbildes oder des Originalbildes kann mit einer der folgend beschriebenen Untersuchungs- und Ordnungsmethoden erfolgen:

1. Berechnung einer Differenz von z.B. Grauwerten eines Zwischenbildes von dem direkt vorangegangenen oder einem vorangegangenen Zwischenbild oder dem Originalbild.

2. Berechnung einer Differenz von Texturflächen im aktuellen Zwischenbild und in einem vorangegangenen, insbesondere dem direkt vorangegangenen, Zwischenbild oder dem Originalbildes.

3. Berechnung einer Differenz zwischen Begrenzungslängen der Texturflächen des aktuellen Zwischenbildes und eines vorangegangenen, insbesondere des direkt vorangegangenen, Zwischenbildes oder des Originalbildes.

4. Berechnung einer Differenz von Texturflächen nach Anwendung einer Erode- oder Dilate-Operation im aktuellen Zwischenbild und einem vorangegangenen, insbesondere dem direkt vorangegangenen, Zwischenbild oder Originalbild.

5. Berechnung einer Änderung von Grenzen von ausgewählten Texturflächen über eine Differenzbildung von Eigenschaften dieser Grenzen im aktuellen Zwischenbild und einem vorangegangenen, insbesondere dem direkt vorangegangenen, Zwischenbild oder dem Originalbild. Eigenschaften der Grenzen können z.B. eine Länge, eine Zerfranstheit oder ein Perimeter von z.B. Texturflächen sein. Hierbei können insbesondere auch nur Teile der Grenzen oder der Umrandung von ausgewählten Texturflächen berücksichtigt werden (lokale Änderungen der Grenzen).

Hierbei kann sowohl der Begriff Differenz als auch der Begriff Änderung im Sinne eines Unterschieds zwischen einer Auswertung von Bildern (Zwischenbild, Originalbild) verstanden werden.

Eine chronologische Reihenfolge von Operationen kann z.B. wie folgt mittels der vorhergehend genannten Auswertungen gesteuert werden:

1. Die Ergebnisse der einzelnen Vergleiche 1 bis 4 führen zum Abbruch der Operationskette, falls die bestimmten Änderungen oder Differenzen eine vorbestimmte Schwelle unterschreiten. Hierbei kann die Operationskette auch erst dann unterbrochen werden, falls die vorbestimmte Schwelle unterschritten wird und eine Anzahl von bereits angewendeten Operationen größer als eine vorbestimmte Anzahl ist.

2. Sind die Veränderungen oder Differenzen aber weiterhin wesentlich, insbesondere größer als eine vorbestimmte Schwelle, so kann ein Trend der Veränderungen oder Differenzen bestimmt werden. Mittels der Bestimmung des Trends kann analysiert werden, welche Änderungen oder Differenzen in einer Anzahl von vorangegangenen, insbesondere von 6 vorangegangenen, Operationen besonders bedeutend, insbesondere größer als ein vorbestimmter Schwellwert, waren. Eine nachfolgende Operation kann dann diesem Trend entsprechend, z.B. diesen Trend unterstützend, ausgewählt werden.

3. Wenn das Ergebnis der 5. Auswertung starke Änderungen ergibt, insbesondere größer als ein vorbestimmter Schwellwert ist, so sind die bestimmten Grenzen noch nicht hinreichend genau. Es können dann z.B. Operationen zur Verfeinerung der Bestimmung von Texturflächen in diesem Gebiet ausgewählt werden. Hierdurch können insbesondere Kleinstunterschiede von Nachbarpunkten in diesem Gebiet analysiert werden.

4. Falls eine gewünschte Textur innerhalb eines Teils des Bildes detektiert ist und Operationen hinsichtlich einer Feinanalyse von Textureigenschaften keine neuen Grenzen des analysierten Teils des Bildes ergeben haben, dann kann die weitere Suche abgebrochen werden.

5. Falls sich ein größerer Trend in einer Veränderung ergibt, können Operationen mit jeweils veränderten Parametern so lange angewendet werden, bis sich dieser Trend stark abschwächt.

6. Falls nach einer Anwendung von Operationen aus einer speziellen Klasse von Operationen keine wesentliche Änderung erfolgt, so werden Operationen einer weiteren Klasse von Operationen angewendet.

Hierfür können Operationen so genannten Klassen von Operationen zugeordnet werden. Klasse von Operationen umfassen hierbei Operationen, deren Anwendung die gleiche Bildeigenschaft oder die gleichen Bildeigenschaften ändert. Zusätzlich können die Operationen auch gleiche pixelbezogene Reichweiten aufweisen.

Klassen von Operationen können auch nach dem Kriterium unterschieden werden, ob Operationen auf den gesamten Bildbereich oder nur auf ausgewählte Teil- oder Umgebungsbereich eines aktuell betrachteten Pixels angewendet werden. Eine Klasse von Operationen kann beispielsweise eine Signum-Operation

$$G_{i,j} = \sum_{k=-M}^{M} \sum_{l=-N}^{N} sign(x_{i,j} - x_{i+k,j+l}) \qquad \text{Formel 3}$$

umfassen, wobei $x_{i,j}$ einen Pixel des betrachten Bildes und M, N Parameter einer Reichweite der Signum-Operation bezeichnet. Hierbei sind M und N die veränderbaren Parameter der Operation. Hierbei wird also dem Pixel $x_{i,j}$ der in Formel 3 berechnete Wert durch die Signum-Operation zugewiesen.
Hierbei wird zur Vereinfachung der Schreibweise $x_{i,j}$ sowohl als Pixelkoordinate als auch für den auf diese Koordinate abgetragenen Wert im Folgenden benutzt.
Weitere Klassen von Operationen können Differenz-Relation-Operationen

$$D_{i,j} = \sum_{k=-M}^{M} \sum_{l=-N}^{N} abs(x_{i,j} - x_{i+k,j+l}) \qquad \text{Formel 4}$$

oder Entropy-Operationen

$$I_{i,j} = -\sum_{k=-M}^{M} \sum_{l=-N}^{N} x_{i+k,j+l} \log_2(x_{i+k,j+l}) \qquad \text{Formel 5}$$

oder Differenz-Smooth-Operationen

$$S_{i,j} = x_{i,j} - smooth(\{x_{i-m,j-n} \ldots x_{i+m,j+n}\}) \qquad \text{Formel 6,}$$

wobei der Operator {} in diesem Fall die Pixelfolge von i=-M..M bzw. j= -N..N bezeichnet, oder Periodizität-Operationen

$$P_{i,j} = \sum_{k=-M}^{M} \sum_{l=-N}^{N} \frac{x_{i,j} - x_{i+k,j+l}}{1+(k-l)^2})$$ 

Formel 7,

oder lokale Histogramm-Operationen

$$K_{i,j} = histogram\left( \sum_{k=-M}^{M} \sum_{l=-N}^{N} abs\left(x_{i,j} - x_{i+k,j+l}\right)\right)$$

Formel 8

umfassen.

Auch kann eine Klasse von Operationen eine Rangfilter-Operation

$$R_{i,j}(M,N) = \sum_{l=-M}^{M} \sum_{k=-N}^{N} u\left(y_{i,j} - y_{l,k}\right)$$

Formel 9

umfassen, wobei

$$u(y) = \begin{cases} 0 & \text{for} \quad y < 0 \\ 1 & \text{for} \quad y \geq 0 \end{cases}$$

Formel 10.

Eine bevorzugte Klasse von Operationen umfasst eine so genannte verallgemeinerte Rangfilter-Operation

$$S_{i,j}(g,M,N) = \sum_{l=-M}^{M} \sum_{k=-N}^{N} u\left( \left|y_{i,j} - g\right| - \left|y_{l,k} - g\right| \right) u\left(y_{i,j} - y_{k,l}\right)$$

Formel 11,

wobei

$$u(y) = \tfrac{1}{2} sign(y) + \tfrac{1}{2})$$

Formel 12.

Hierbei ist die Schwelle g über das α-Quantil

$$\alpha = \frac{1}{\sqrt{2\pi}} \int_{\frac{2g-m}{\sqrt{\sigma}}}^{\infty} e^{-y^2/2} \, dy$$

Formel 13,

bestimmt, wobei α und σ variierbare Parameter darstellen, y eine Grauwertintensität bezeichnet und m einen Mittelwert der Grauwertintensitäten in dem Bereich l=-M...M, j=-N...N.

Über alle Pixel eines betrachteten Bildes kann die verallgemeinerte Rangfilter-Operation auch als

$$S\left(\{y_{ij}, N, M, g, D\}\right) = \sum_{k=-N}^{N} \sum_{l=-M}^{M} u\left(y_{ij} + y_{kl} - 2g\right) \bullet \left(\langle y_{ij} \rangle \geq D\right)$$

Formel 14

geschrieben werden, wobei der Operator {} in diesem Fall die Folge i=1...I, j=1...J bezeichnet, wobei das Bild I*J Pixel umfasst. In Formel 14 bezeichnet D eine vorbestimmte Schwelle und <> ein Mittelwert der Grauwerte über den Bereich i=1...I, j=1...J. Hierbei werden also allen Pixeln $x_{i,j}$ die entsprechenden durch Formel 14 ausgedrückten Werte zugewiesen, wobei der zweite Faktor in Formel 14 bedeutet, dass dem Pixel $x_{i,j}$ der nur dann der Wert des ersten Faktors zugewiesen wird, falls der Mittelwert der Grauwerte über den Bereich i=1...I, j=1...J größer gleich der vorbestimmten Schwelle ist.

In Abhängigkeit der (verallgemeinerten) Rangfilter-Operation können weitere Klassen definiert werden, die z.B. eine Rangfilter-Mittelwert-Operation

$$s_1(b) = f\left(S_{M1,N1} - S_{M2,N2}\right), \qquad b = \{x_{i,j}\} \qquad\qquad \text{Formel 15,}$$

eine Rangfilter-Kontur-Operation

$$s_2(b) = f\left(dilate(b) - erode(b)\right) > const \qquad\qquad \text{Formel 16,}$$

eine Rangfilter-Konturcharakterisierungs-Operation

$$s_3 = \left(s_2(b_1) - s_2(b_2)\right) \; and \; \left(s_2(b_3) - s_2(b_4)\right) \qquad\qquad \text{Formel 17,}$$

eine Rangfilter-Grenzregioncharakterisierungs-Operation

$$s_4 = \left(\sum \; \left\langle f\left(dilate(b_1) - dilate(b_2)\right)\right\rangle\right) > const \qquad\qquad \text{Formel 18}$$

oder eine Rangfilter-Histogramm-Operation

$$s_5 = f\left(\max(hist(b_1) > const_1, \max(hist(b_2) > const_2\right) \qquad\qquad \text{Formel 19}$$

umfassen. Hierbei bezeichnet $\{x_{i,j}\}$ die Folge von Bildpixeln i=1...I j=1...J, die Operation $S_{M1,N1}$ eine verallgemeinerte Rangfilter-Operation mit Reichweite l=-M1...M1, k=-N1...N1, die Operation $S_{M2,N2}$ eine verallgemeinerte Rangfilter-Operation mit Reichweite l=-M2...M2, k=-N2...N2, wobei N1, M1 verschieden von N2, M2 sind. Die Bezeichnungen $b_1$, $b_2$, $b_3$, $b_4$ bezeichnen Bilder mit gleicher Pixelanzahl aber unterschiedlichen Bildinformationen und const bezeichnen nutzerabhängig gewählte Schwellen.

Hierbei sind mittels der Operation nach den Formeln 3 bis 19 in vorteilhafter Weise unterschiedliche Bildinformationen herausfilterbar.

Weiter können Klassen Filter-Operationen bekannter Filteralgorithmen wie z.B. Kalman-Filter, Smooth-Filter, Median-Filter, Lee-Filter, Digital-Filter (Hochpass-Filter, Tiefpass-Filter, Bandpass-Filter), Savitzky-Golay-Smoothing -Filter oder Low-Pass-Butterworth-Filter umfassen.

Weiter können Klassen funktionelle Operationen wie z.B. Wavelet-Transformationen umfassen. Mit der Wavelet-Transform werden die in den Bildern enthaltenen funktionalen Beziehungen ermittelt. Durch Wahl der verschiedenen Wavelets und die anschließende Rücktransformation werden Charakteristika der Bildes (Periodizitäten) hervorgehoben. Die Ergebnisse der Wavelet-Transfomation werden auch gefiltert und heben in der Rücktransformation besonders die stochastischen Eigenschaften hervor.

Auch können Klassen Operationen zur Bildung von Ableitungen bzw. des Gradienten innerhalb des Bildes in verschiedenen Richtungen und Abständen zwischen einem aktuell betrachteten Pixel und einem ausgewählten Nachbarpunkt umfassen. Damit können Grenzschichten in verschiedenen Richtungen hervorgehoben werden.

Auch können Klassen Operationen zur Anwendung einer so genannten Watershed-Methode umfassen, wobei hierdurch Flächen hervorgehoben werden, die annähernd gleich sind bezüglich von Textureigenschaften. Diese Methode kann auch zur Bestimmung von Änderungen zwischen zwei Bildern genutzt werden.

Auch können Klassen Operationen zur logischen Verknüpfung z.B. AND-Operationen, OR-Operationen, XOR-Operationen, Vereinigungs-Operationen und Durchschnitts-Operationen umfassen. Damit werden z. B. unterschiedliche Eigenschaften von Bildern verkoppelt.

Auch durch eine Zerlegung eines Bildes in seine Binärbilder, aus denen es zusammengesetzt ist und die logische Verkopplung dieser Binärbilder können innere Beziehungen im Bild sichtbar machen. So stellte ein Binärbild der unteren Bits (oberhalb des Bildrauschens) die Stochastik im Bild dar. Durch AND-Verknüpfung mit einem höheren Binärbild kann die Stochastik in den hellen Teilen des Bildes hervorgehoben werden. Durch Negation des höheren Binärbildes werden entsprechend die Beiträge der Stochastik in den dunklen Bildteilen hervorgehoben.

Auch können Klassen Operationen zur algebraischen Verknüpfungen wie z.B. Multiplikations-Operationen, Divisions-Operationen, Potenzbildungs-Operationen, Logarithmierungs-Operationen und Schwellwert-Operationen umfassen

Parameter der vorhergehend erläuterten Operationen betreffen z.B. eine Anzahl der betrachteten Nachbarpunkte und/oder eine geometrische Form die die betrachteten Nachbarpunkte. Weiter können Parameter eine Reichweite und Stärke einer Filterung sowie weitere übliche Filterparameter bezeichnen. Bei Operationen zur Anwendung der Watershed-Methode kann ein Parameter eine Auflösung sein, wobei die Auflösung derart variiert werden kann, dass die kleinsten und größten gesuchten Bildobjekte innerhalb der Variationsbreite liegen. Bei der Wavelet-Transformation kann eine Anzahl der Waveletfilterkoeffizienten mit 4, 12 oder 20 gewählt werden.

Weiter kann eine Klasse von Operationen z.B. Operationen enthalten, die sich ausschließlich auf eine Analyse oder Bearbeitung von unmittelbar benachbarten Pixeln des aktuell betrachteten Pixels beziehen (kurzreichende Wechselwirkung). Eine weitere Klasse von Operationen kann beispielsweise Operationen umfassen, die eine Beziehung des aktuell betrachteten Pixels zu Pixeln einer Region analysiert, wobei die Region nicht ausschließlich die nur unmittelbar benachbarten Pixel umfassen muss (weitreichende Wechselwirkung). Bei dem Hervorheben der kurz - bzw. weitreichenden Wechselwirkungen kann ein Bereichsparameter a derart gewählt werden, dass die Wechselwirkung innerhalb eines Bereiches bleibt, den das gesuchte Bildobjekt im Bild einnehmen kann.

Weitere Klassen von Operationen können beispielsweise Operationen enthalten, die besonders kantensensitiv oder besonders glättend, sind. Die Klassen unterscheiden sich somit hinsichtlich einer generellen Charakteristik der in ihnen enthaltenen Operationen.

Hierdurch kann in vorteilhafter Weise eine schnellere Bestimmung der Reihenfolge von Operationen erfolgen.

In einer weiteren Ausführungsform resultiert zumindest ein Teil einer Reihenfolge von Operationen aus einer Parametersteuerung. Hierbei ist einer Operation mindestens ein veränderbarer Parameter zugeordnet. Diesem veränderbaren Parameter einer Operation ist wiederum eine Menge vorbestimmter Parameterwerte zugeordnet. Hierbei erfolgt eine wiederholte Anwendung dieser Operation mit jeweils unterschiedlichen Werten von Parametern bis eine vorbestimmte Schwelle der Änderungen zu den vorhergehenden Zwischenbildern, insbesondere zu dem zuletzt vorhergehenden Zwischenbild und/oder dem Originalbild unterschritten wird oder alle Parameterwerte der Menge vorbestimmter Parameterwerte angewendet wurden. Diese Phase kann auch als Parametersteuerung beschrieben werden, wobei während einer Parametersteuerung eine Anzahl von Zwischenbildern erzeugt werden.

Auch kann im zweiten Teil des Verfahrens ein allgemeines Texturbild aus allen Zwischenbildern erzeugt werden, die als letztes Zwischenbild einer Parametersteuerung erzeugt werden, wobei Textureigenschaften von Texturflächen dieser aus einer Parametersteuerung resultierenden Zwischenbilder bestimmt und verknüpft werden. In dem dritten Teil des Verfahrens werden dann die verknüpften Textureigenschaften mit den vorbekannten Textureigenschaften verglichen, wobei das Bildobjekt mit vorbekannten Textureigenschaften detektiert wird, falls die verknüpften Textureigenschaften gleich oder ähnlich den vorbekannten Textureigenschaften sind.

In einer weiteren Ausführungsform resultiert zumindest ein Teil einer Reihenfolge von Operationen aus einer Operationssteuerung oder einer Klassensteuerung. Die Operationssteuerung bezeichnet eine Auswahl einer nachfolgenden Operation aus einer Menge von verfügbaren weiteren Operationen, die Klassensteuerung bezeichnet hierbei eine Auswahl einer Klasse von Operationen, wobei die nachfolgende Operation dieser Klasse von Operationen zugeordnet ist.

Wie vorhergehend beschrieben kann für eine Operation eine so genannte Parametersteuerung durchgeführt werden, aus der sich ein Teil der Reihenfolge von Operationen ergibt. Wird die Parametersteuerung für eine Operation beendet, so kann eine nachfolgende Operation mittels Operationssteuerung oder mittels Klassensteuerung bestimmt werden, wobei dann wiederum eine Parametersteuerung für die ausgewählte Operation erfolgt, die derselben Klasse oder einer weiteren Klasse wie die zuletzt angewandte Operation zugeordnet sein kann. Auch dem mindestens einen veränderbaren Parameter dieser nachfolgenden Operation ist wiederum eine Menge vorbestimmter Parameterwerte zugeordnet. Somit ergibt sich für die Reihenfolge von Operationen ein Wechsel aus Parametersteuerung und Operationssteuerung oder Klassensteuerung.

Auch kann im zweiten Teil des Verfahrens ein allgemeines Texturbild aus all denjenigen Zwischenbildern erzeugt werden, die als letztes Zwischenbild einer Klassensteuerung erzeugt wurden, wobei das letzte Zwischenbild einer Klassensteuerung das letzte Zwischenbild vor einem Wechsel einer Klasse bezeichnet. Hierbei werden Textureigenschaften von Texturflächen dieser aus einer Klassensteuerung resultierenden Zwischenbilder bestimmt und verknüpft. In dem dritten Teil des Verfahrens werden dann die verknüpften Textureigenschaften mit den vorbekannten Textureigenschaften verglichen, wobei das Bildobjekt mit vorbekannten Textureigenschaften detektiert wird, falls die verknüpften Textureigenschaften gleich oder ähnlich den vorbekannten Textureigenschaften sind.

In einer weiteren Ausführungsform erfolgt eine Auswahl der nachfolgenden Operation aus einer Menge von verfügbaren weiteren Operationen (Operationssteuerung) oder die Auswahl einer Klasse nachfolgender Operationen (Klassensteuerung) in Abhängigkeit einer Höhe einer Änderung zwischen dem aktuellen Zwischenbild (oder Originalbild) und dem aus der Anwendung der Operation resultierenden Zwischenbild.

Hierbei kann beispielsweise für jede noch verfügbare, also noch nicht angewendete, Operation ein exemplarischer Parameterwert oder exemplarische Parameterwerte ausgewählt und diese Operation auf das aktuelle Zwischenbild angewendet werden. Für jede dieser Operationen wird dann die Höhe der Änderung bestimmt. Die nachfolgende Operation ist dann die Operation, die eine maximale Änderung bewirkt hat. Diese Phase kann auch als so genannte Operationssteuerung bezeichnet werden.

Alternativ kann beispielsweise für jede noch verfügbare Klasse von Operationen, eine exemplarische Operation mit vorbestimmten Parameterwerten ausgewählt und auf das aktuelle Zwischenbild angewendet werden. Eine verfügbare Klasse von Operationen bezeichnet eine Klasse von Operationen aus der mindestens eine Operation noch nicht im Rahmen einer Parametersteuerungsphase angewendet wurde. Alternativ kann eine verfügbare Klasse von Operationen auch eine Klasse von Operationen bezeichnen aus der noch keine Operation im Rahmen einer Parametersteuerungsphase angewendet wurde. Für jede dieser Operationen wird dann die Höhe der Änderung bestimmt. Die nachfolgende Operation ist dann eine Operation der Klasse, deren exemplarische Operation die maximale Änderung bewirkt hat. Diese Phase kann auch als so genannte Klassensteuerung bezeichnet werden. In diesem Fall kann zusätzlich auch noch eine Höhe einer Änderung bestimmt und berücksichtigt werden, die durch Anwendung einer exemplarischen Operation, die der derselben Klasse von Operationen wie die zuletzt angewendete Operation zugeordnet ist, verursacht wird. Klassen von Operationen, deren Operationen bereits vollständig angewandt wurden, können hierbei unberücksichtigt bleiben.

Somit ergibt sich für die Reihenfolge von Operationen ein Wechsel aus Parametersteuerung und Operationssteuerung oder Klassensteuerung. Eine Parametersteuerung erfolgt so lange, bis eine Änderung eine vorbestimmte Schwelle unterschreitet oder alle Parameterwerte der Menge vorbestimmter Parameterwerte angewendet wurden. Hieran anschließend wird eine Operationssteuerung oder Klassensteuerung durchgeführt, wobei für die dann ausgewählte Operation wieder eine Parametersteuerung durchgeführt wird.

Hierdurch ergibt sich in besonders vorteilhafter Weise eine iterative Extraktion von den gesuchten Bildobjekten, falls diese im Bild vorhanden sind.

Die betrachteten Änderungen können hierbei operationsspezifisch und/oder klassenspezifisch und/oder globale Änderungen sein. Hierbei kann angenommen werden, dass eine Anwendung einer bestimmten Operation und/oder eine Anwendung von Operationen einer Klasse von Operationen mindestens eine Bildeigenschaft des jeweiligen Ausgangsbildes verändert. Eine operationsspezifische oder klassenspezifische Änderung ist hierbei eine Änderung bezüglich dieser mindestens einen Bildeigenschaft. Globale Änderungen können dagegen auch Änderungen umfassen, die unabhängig von der Operation und/oder der Klasse von Operationen sind. Globale Änderungen umfassen beispielsweise auch Änderungen von Textureigenschaften, insbesondere den zu den vorbekannten Textureigenschaften korrespondierenden Textureigenschaften in den jeweiligen Bildern.

Erfindungsgemäß kann neben der reinen Auswertung auch eine Analyse der Unterschiede von Auswertungen des aktuellen Zwischenbilds und des vorangegangenen, insbesondere des direkt vorangegangenen, Zwischenbildes oder des Originalbildes erfolgen. Somit wird die Reihenfolge von Operationen über eine Auswertung von Zwischenbildern oder von Unterschieden zwischen Zwischenbildern bzw. des Originalbilds gesteuert, die sich aus vorher angewandten Operationen ergeben. Eine Anwendung von Operationen kann hierbei so lange erfolgen, bis eine vorbestimmte Schwelle des Unterschiedes zum jeweils vorhergehenden Zwischenbild unterschritten wird.

Die jeweiligen Ergebnisse der Auswertungen und/oder Unterschiede der Auswertungen aus der Anwendung der verschiedenen Operationen auf das Originalbild bzw. die Zwischenbilder können individuell abgespeichert werden, beispielsweise in einzelnen Speicherspalten einer Tabelle notiert werden, um auf dieser Basis eine nächstfolgende Operation auswählen zu können.

In einer weiteren Ausführungsform sind die Operationen einer Mehrzahl von Klassen zugeordnet, wobei die Auswahl einer Operation zusätzlich in Abhängigkeit einer klassenspezifischen Anwendungshäufigkeit erfolgt, wobei die klassenspezifische Anwendungshäufigkeit eine Anwendungshäufigkeit von Operationen einer bestimmten Klasse bezeichnet. Alternativ oder kumulativ kann die Auswahl einer Operation zusätzlich in Abhängigkeit einer vorbestimmten Rangordnung von Klassen und/oder Prozeduren erfolgen. Eine erste Klasse von Operationen kann z.B. Operationen enthalten, die sich ausschließlich auf eine Analyse oder Bearbeitung von unmittelbar benachbarten Pixeln des aktuell betrachteten Pixels beziehen (kurzreichende Wechselwirkung). Eine weitere Klasse von Operationen kann beispielsweise Operationen umfassen, die eine Beziehung des aktuell betrachteten Pixels zu Pixeln einer Region analysiert, wobei die Region nicht ausschließlich die nur unmittelbar benachbarten Pixel umfassen muss (weitreichende Wechselwirkung). Weitere Klassen von Operationen können beispielsweise Operationen enthalten, die besonders kantensensitiv oder besonders glättend, sind. Die Klassen unterscheiden sich somit hinsichtlich einer generellen Charakteristik der in ihnen enthaltenen Operationen. Hierdurch kann in vorteilhafter Weise eine schnellere Bestimmung der Reihenfolge von Operationen erfolgen. Hierbei kann also eine klassenspezifische Anwendungshäufigkeit bei der vorhergehend erwähnten Sequenz von Parametersteuerung und Klassensteuerung berücksichtigt werden. Insbesondere kann die klassenspezifische Anwendungshäufigkeit berücksichtigt werden, wenn eine verfügbare Klasse von Operationen eine Klasse von Operationen bezeichnet aus der mindestens eine Operation noch nicht im Rahmen einer Parametersteuerungsphase angewendet wurde.

Da Kombinationsmöglichkeiten von Operationen sehr vielfältig sind, ist eine zielgerichtete Auswahl einer auf eine aktuelle Operation folgenden Operation wichtig, um schnell zu Ergebnissen zu gelangen. Die Operationen können hierbei bezüglich ihrer Sensitivität hinsichtlich bestimmter Textureigenschaften oder bezüglich ihrer Sensitivität hinsichtlich bestimmter Unterschiede von Textureigenschaften geordnet werden, d.h. z.B. gegenüber einer Art der Textur, gegenüber einer Feinheit der Textur und/oder gegenüber eine Unabhängigkeit von ermittelten Textureigenschaften untereinander. Auch diese Ordnung kann eine Zuordnung zu verschiedenen Klassen begründen.

Auch können Operationen hinsichtlich ihrer pixelbezogenen Reichweite geordnet werden, z.B. hinsichtlich einer Sensitivität gegenüber pixelbezogen kurzreichender Wechselwirkungen oder pixelbezogen weitreichender Wechselwirkungen.

Weiter können Operationen hinsichtlich ihrer Eignung zur Analyse einer Textur innerhalb homogener Gebiete (z.B. im Gehirn oder in der Leber) oder in inhomogenen Gebieten (z.B. der Mundregion) geordnet werden.

Auch können Operationen hinsichtlich ihrer Sensitivität gegenüber Wiederholstrukturen in Teilen des Bildes oder Texturflächen oder gegenüber einer Flächenausdehnung von Texturflächen geordnet sein.

Weiterhin können Operationen verschiedenartige Bearbeitungsalgorithmen wie z.B. verschiedene Filteralgorithmen, Glättungsalgorithmen, Waveletanalyse usw. umfassen, die sensitiv gegenüber flächenhaften Merkmalen einer Textur sind.

Sensitiv bedeutet hierbei, dass eine Operation geeignet ist, Teil des Bildes mit der jeweiligen Eigenschaft durch eine Anwendung der Operation besonders hervorzuheben, zu unterdrücken oder in einer anderen Art und Weise zu filtern.

Die Operationen können hierbei insbesondere derart gesteuert werden, dass Operationen, die verschiedenen Ordnungsspalten zugeordnet sind, zeitlich aufeinander folgen. In einer Ordnungsspalte werden hierbei Ergebnisse einer Auswertung einer bestimmten Textureigenschaft eingetragen. Einer Ordnungsspalte kann somit eine oder können mehrere Operationen zugeordnet sein, die die bestimmte Textureigenschaft filtern, insbesondere hervorheben. Um eine möglichst schnelle Analyse eines Bildes zu erhalten, werden also Operationen, die verschiedenen Ordnungsspalten zugeordnet sind, zeitlich aufeinander folgend ausgewählt ohne zunächst alle einer Ordnungsspalte zugeordnete Operationen durchzuführen.

Wird ein Zwischenbild ausgewertet, so kann anhand des Ergebnisses der Auswertung nicht eine spezifische Operation, sondern eine spezifische Klasse von Operationen ausgewählt werden, deren Operationen eine Charakteristik oder Sensitivität aufweisen, die für eine nachfolgende Operation am effektivsten scheint. Somit kann die mindestens eine weitere Operation als Operation einer bestimmten Klasse von Operationen ausgewählt werden. Die Auswahl aus einem Reservoir von möglichen Operationen, also aus einer bestimmten Klasse von Operationen, und die Reihenfolge der jeweiligen Anwendung wird somit ergebnisorientiert gesteuert. Somit kann die vorhergehend beschriebene Klassensteuerung oder auch die Operationssteuerung in Abhängigkeit einer gewünschten Charakteristik oder Sensitivität erfolgen.

Auch kann die vorhergehend beschriebene Klassensteuerung oder auch die Operationssteuerung in Abhängigkeit von den vorbekannten Textureigenschaften der gesuchten Bildobjekte erfolgen, wobei eine Operation oder Klasse von Operationen ausgewählt wird, deren Anwendung mindestens eine Eigenschaft in dem Original- oder Zwischenbild ändert, die zu mindestens einer vorbekannten Textureigenschaft korrespondiert oder diese isoliert oder diese hervorhebt. Vorzugsweise wird die Operation oder die Klasse von Operationen gewählt, deren Anwendung die mindestens eine Eigenschaft im dem Original- oder Zwischenbild, die zu mindestens einer vorbekannten Textureigenschaft korrespondiert oder diese isoliert oder diese hervorhebt, am stärksten ändert.

Auch kann die vorhergehend beschriebene Klassensteuerung oder auch die Operationssteuerung in Abhängigkeit einer bereits bekannten Reihenfolge von Operationen oder Klassen erfolgen, wobei die bereits bekannte Reihenfolge eine gespeicherte Reihenfolge aus vorangegangenen Anwendungen von Operationen sein kann, die ein erfolgreiche Detektion der gesuchten Bildobjekte ermöglicht hat.

Eine Klasse von Operationen kann hierbei z.B. alle Operationen umfassen, die einer bestimmten Ordnungsspalte zugeordnet sind.

Weiter kann die Auswahl einer Operation zusätzlich in Abhängigkeit einer klassenspezifischen Anwendungshäufigkeit erfolgen. Hierbei kann jeder Klasse von Operationen ein so genannter Anwendungszähler zugeordnet werden. Dieser kann beispielsweise mit einer hohen Zahl initialisiert sein. Bei jeder erfolgten Operation dieser Klasse wird dieser Anwendungszähler verringert. Auch kann der Anwendungszähler bei jeder vollständig durchlaufenen Parametersteuerung einer Operation dieser Klasse verringert werden. Falls eine vorbestimmte Schwelle des Anwendungszählers erreicht ist, wird eine Operation aus dieser Klasse von Operationen nicht mehr angewendet. Selbstverständlich ist auch vorstellbar, dass der Anwendungszähler mit einer niedrigen Zahl initialisiert wird, bei jeder Anwendung einer Operation der Klasse inkrementiert wird und eine Anwendung von Operationen dieser Klasse von Operationen nicht mehr erfolgt, falls der Anwendungszähler eine vorbestimmte Schwelle überschreitet. Hierdurch wird in vorteilhafter Weise sichergestellt, dass noch nicht angewandte Operationen mit einer bestimmten Charakteristik für die Auswahl einer folgenden Operation priorisiert werden. Anhand des Anwendungszählers kann also festgestellt werden, welche Arten von Operationen (bezüglich ihrer Charakteristik) noch nicht oder selten angewendet wurden. Diese können dann im nächsten Schritt priorisiert werden.

In einer weiteren Ausführungsform erfolgt die Auswahl einer Operation oder einer Klasse von Operationen zusätzlich in Abhängigkeit von Textureigenschaften von mindestens einer Texturfläche mindestens eines der bereits erzeugten Zwischenbilder und/oder des Originalbildes. Hierbei können z.B. bei der Auswertung eines Zwischenbildes oder des Originalbildes Textureigenschaften wie z.B. eine Existenz einer isolierten Region gleicher oder ähnlicher Textur (erste Texturfläche) eingebettet in eine Region anderer Textur (zweite Texturfläche), eine Art einer Umrandung einer Texturfläche, eine Lage eines Schwerpunkts einer Texturfläche, Trägheitsmomente einer Texturfläche, eine Größe einer Texturfläche, Perimeter einer Texturfläche, eine Zerfranstheit einer Texturfläche und stochastische Randeigenschaften einer Texturfläche (scharfer oder unscharfer Rand) analysiert werden. Hierfür können im Zwischenbild und/oder im Originalbild Texturflächen, wie vorhergehend beschrieben, ermittelt werden.

Bei einer derartigen Analyse können Flächen mit besonderen Strukturen, wie z.B. Knochen, vorab über Graustufen-Niveaus ausgesondert werden. Hierfür können z.B. so genannte Grauwert-Schwellwertfilter angewendet werden. Aus den vorhergehend aufgezählten Textureigenschaften der Zwischenbilder oder des Originalbildes können analog zu den weiter vorhergehend angeführten Auswertungen weitere anzuwendende Operationen ausgewählt werden. Vor der Bestimmung von Textureigenschaften kann auch eine Segmentierung von Flächen gleicher oder ähnlicher Textur (Texturflächen) erfolgen. Eine derartige Segmentierung wird später bezüglich einer Verarbeitung von allgemeinen Texturbildern näher erläutert.

In einer weiteren Ausführungsform erfolgt die Auswahl einer Operation oder einer Klasse von Operationen in Abhängigkeit eines Unterschiedes zwischen Textureigenschaften von mindestens einer Texturfläche mindestens eines der bereits erzeugten Zwischenbilder und/oder des Originalbildes und vorbekannten Textureigenschaften, beispielsweise Textureigenschaften eines vorbestimmten Bildobjekts. Hierbei erfolgt die ergebnisabhängige Auswahl von Operationen auf dem Niveau von allgemeinen Texturbildern. Hierbei wird ein Zwischenbild als allgemeines Texturbild betrachtet und analog zum vorhergehend erläuterten dritten Teil des Verfahrens ein Vergleich von Textureigenschaften von Texturflächen des Zwischenbildes mit vorbekannten Textureigenschaften durchgeführt. Hierzu werden die Zwischenbilder als allgemeine Texturbilder dargestellt. Die so dargestellten Zwischenbilder werden dann auf das Vorhandensein von gesuchten Strukturen, insbesondere auch auf das Vorhandensein gesuchter Beziehungen zu Nachbarstrukturen, untersucht. Hierzu kann die Anordnung von einzelnen Strukturen analytisch verglichen werden. Zum Auffinden von Tumoren ist z.B. zu untersuchen, ob Struktur- oder Textur-Inseln innerhalb von ähnlichen Strukturen oder Texturflächen auftreten. Es wird hierzu eine Klassifizierung von Texturflächen durch z.B. Vergleich mit vorbekannten Eigenschaften von Texturflächen vorgenommen. Zur Klassifizierung der Texturflächen kann z.B. die Größe von vorbekannten Texturflächen, die Winkelausrichtung von vorbekannten Texturflächen, ein mittlerer Grauwert oder Grauwertschwankungen innerhalb dieser Texturflächen sowie ein Abstand von Teilflächen einer Texturfläche des Bildobjekts mit vorbekannten Textureigenschaften bestimmt und mit den im erfindungsgemäßen Verfahren bestimmten Texturflächen verglichen werden. Zur algorithmischen Realisierung können hierzu verschiedene Texturflächen über monoton wachsende Grauwerte dargestellt werden.

Eine Segmentierung bzw. Analyse von Texturflächen im Zwischen- oder Originalbild kann hierbei z.B. mit der so genannten Wasserscheidenmethode (Watershed-Methode) durchgeführt werden. Hierbei werden alle Flächen des auf ein Niveau eines allgemeinen Texturbildes transformierten Zwischen- oder Originalbildes, die innerhalb eines Grauwertbereiches liegen, zusammengefasst. Somit können also auch Flächen, die nicht schon aufgrund ihrer Textureigenschaften einen bestimmten Grauwert zugeordnet bekommen haben, einem Grauwert zugeordnet werden. Möglich ist hierbei auch eine Markierung (label, label region) und dann eine Ordnung mit einer Zugehörigkeitskennung, einer Beschreibung von Mittelpunkten, einer Größe der segmentierten Flächen, eine Größe des Umfangs der segmentierten Flächen. Hierbei kann vorgegeben sein, dass nur Flächen ab einer bestimmten Größe oder kleiner als eine bestimmte Größe berücksichtigt werden. Um segmentierte Flächen nicht zu zerpflücken, kann ein Rand der segmentierten Flächen über eine Erode-Operation geglättet werden. Mit Hilfe einer Dilate-Operation können auch Unglattheiten, insbesondere Zacken, am Rand einer segmentierten Fläche bestimmt werden, wenn die Ergebnisse der Dilate-Operation mit den Ergebnissen der Erode-Operation verglichen werden.

Die Ergebnisse der Segmentierung von Texturflächen sowie deren Textureigenschaften können z.B. für jedes Zwischenbild abgespeichert werden. Vorzugsweise erfolgt eine Speicherung gemeinsam mit einer Reihenfolge von Operationen und deren Parametern, mit denen das jeweilige Zwischenbild erzeugt wurde. Z.B. kann nach einer ersten Operationskette eine automatische Auswertung der gespeicherten Größen erfolgen, um Situationen zu finden, an denen man interessiert ist. Wird z.B. nach einer Tumorregion gesucht, so kann, falls eine solche mit hinreichender Zuverlässigkeit detektiert wurde, ein zugehöriges Bild in Falschfarben zur Betrachtung ausgegeben werden oder lediglich eine Information erfolgen, dass ein Tumor entdeckt wurde.

In einer weiteren Ausführungsform werden im ersten Teil des Verfahrens in mindestens einer weiteren Operationskette mindestens zwei verschiedene Operationen auf das Originalbild angewendet, wobei in einem zweiten Teil des Verfahrens ein allgemeines Texturbild aus dem zuletzt erzeugten Zwischenbild der mindestens einen weiteren Operationskette erzeugt wird, indem mindestens eine Texturfläche des zuletzt erzeugten Zwischenbildes der mindestens einen weiteren Operationskette bestimmt wird, wobei Textureigenschaften des zuletzt bestimmten Zwischenbildes der mindestens einen weiteren Operationskette bestimmt werden, wobei der mindestens einen Texturfläche ein Teil oder Teile des zuletzt bestimmten Zwischenbildes der mindestens einen weiteren Operationskette zugeordnet werden, der oder die gleiche oder ähnliche Textureigenschaften aufweisen, wobei in einem dritten Teil des Verfahrens Textureigenschaften der mindestens einen im zweiten Teil des Verfahrens bestimmten Texturfläche mit vorbekannten Textureigenschaften, beispielsweise Textureigenschaften vorbestimmter Bildobjekte, verglichen werden, wobei das Bildobjekt mit vorbekannten Textureigenschaften detektiert wird, falls Textureigenschaften von der mindestens einen der im zweiten Teil des Verfahrens bestimmten Texturfläche gleich oder ähnlich den vorbekannten Textureigenschaften sind. Wurde beispielsweise in der ersten Operationskette ein gesuchtes Bildobjekt nicht gefunden oder nur mit unzureichender Zuverlässigkeit und/oder Genauigkeit detektiert, so kann eine weitere Operationskette von Operationen auf das Originalbild angewendet werden. Auch können mehrere Operationsketten angewendet werden, um eine Detektion eines Bildobjekts zu verifizieren bzw. zu validieren. So kann z.B. ein Bildobjekt als detektiert klassifiziert werden, falls es in einer Anzahl von Operationsketten detektiert wurde, deren prozentualer Anteil an der Gesamtheit von Operationsketten größer als ein vorbestimmter Schwellwert ist.

In einer weiteren Ausführungsform ist eine Anzahl von Operationen der mindestens einen weiteren Operationskette ungleich einer Anzahl von Operationen der ersten Operationskette, wobei eine Reihenfolge von Operationen der mindestens einen weiteren Operationskette unabhängig von denen in der ersten Operationskette ausgewählten Operationen ist. Hierfür unterscheidet sich in vorteilhafter Weise die erste Operation der ersten Operationskette von der ersten Operation jeder weiteren Operationskette.Hierdurch wird gewährleistet, dass bei sonst gleichartiger Steuerung eine von der Reihenfolge der ersten Operationskette unabhängige Reihenfolge der weiteren Operationskette ergebnisabhängig gesteuert wird. Selbstverständlich können unabhängige Reihenfolgen auch über eine unterschiedliche Zuordnung der Operationen zu Klassen von Operationen gewährleistet werden. Auch kann eine Strategie der Anwendung von Operationen geändert werden. Z.B. können in der ersten Operationskette zuerst Operationen angewendet werden, deren pixelbezogene Reichweite bezüglich ihrer Wirkung klein ist, bevor Operationen angewendet werden, deren pixelbezogene Reichweite groß ist. In einer zweiten Operationskette kann dies genau umgekehrt erfolgen, d.h. erst werden Operationen angewendet, deren pixelbezogene Reichweite groß ist, bevor Operationen angewendet werden, deren pixelbezogene Reichweite klein ist.

Auch in der mindestens einen weiteren Operationskette kann eine Reihenfolge aus Parametersteuerung und Operationssteuerung oder Klassensteuerung erfolgen, wobei vorzugsweise die erste Operation der mindestens einen weiteren Operationskette, für die eine Parametersteuerung durchgeführt wird, verschieden von der ersten Operation der ersten Operationskette ist, für die eine Parametersteuerung durchgeführt wird.

Jede Operationskette wird vorzugsweise mit einer Operation begonnen, die gegenüber voneinander unabhängigen Textureigenschaften sensitiv ist.

Auch kann die erste Operation einer weiteren, z.B. einer zweiten Operationskette, in Abhängigkeit eines Ergebnisses der ersten Operationskette ausgewählt werden. Sind z.B. in der ersten Operationskette in Abhängigkeit einer ersten Textureigenschaft Texturflächen ermittelt worden, die einer gesuchten Textur zugeordnet werden können, dann können in der zweiten Operationskette weitere Textureigenschaften untersucht werden oder genaue Grenzen der Ausdehnung dieser Texturflächen ermittelt werden. Beispielsweise können in der ersten Operationskette Texturflächen in Abhängigkeit einer Grauwert-Differenz ausgewählter benachbarter Pixel und in der zweiten Operationskette Texturflächen in Abhängigkeit einer Grauwert-Differenz zwischen einem betrachteten Pixel und dem über ausgewählte benachbarte Pixel ermittelten Mittelwert ermittelt werden. Um genaue Grenzen der Ausdehnung dieser Texturflächen zu ermitteln, sind vorzugsweise in einer Operationskette gleichartige Operationen, also Operationen einer Klasse oder einer Ordnungsspalte zugeordnete Operationen, anzuwenden.

Alternativ ist eine Anzahl von Operationen der mindestens einen weiteren Operationskette gleich einer Anzahl von Operationen der ersten Operationskette, wobei eine Reihenfolge von Operationen der mindestens einen weiteren Operationskette unabhängig von den in der ersten Operationskette ausgewählten Operationen ist oder eine Reihenfolge von Operationen der mindestens einen weiteren Operationskette eine Permutation der Reihenfolge der Operationen der ersten Operationskette ist. Ist z.B. eine Entscheidung über eine Detektion des Bildobjekts noch nicht möglich oder noch nicht ausreichend genau, dann kann eine Permutation der Reihenfolge der Operationen, die in der ersten Opera-

EP 2 405 400 A2

tionskette angewendet wurden, durchgeführt werden. Auch hier kann bei jeder Permutation der Reihenfolge das zuletzt erzeugte Zwischenbild und die zugehörigen Ergebnisse abgespeichert werden. Beispielsweise können die vorhergehend genannten Ergebnisse in Listen aufgezeichnet werden und dann eine Listenverarbeitung nach einem gesuchten Ergebnis (Bildobjekt) durchgeführt werden. Für eine Listenverarbeitung können Beziehungen benutzt werden, wie sie z.B. in der Programmiersprache LISP oder PROLOG üblich sind. Neben einer Suche nach einer Optimierung einer Reihenfolge können auch verschiedene Kombinationen von ausgewählten Folgen von Operationen getestet und das letzte zugehörige Zwischenbild bzw. die zugehörigen Ergebnisse gespeichert werden. Resultate einer Reihenfolge von Operationen sowie die Reihenfolge der Operationen mit erfolgreichem Verlauf können zusammen mit einem gesuchten Bildobjekt abgespeichert werden, um somit in einer erneuten Anwendung des erfindungsgemäßen Verfahrens schnell und effektiv eine erfolgreiche Reihenfolge von Operationen anwenden zu können.

Auch kann bei einer Operationssteuerung die Reihenfolge von Operationen der mindestens einen weiteren Operationskette unabhängig von den in der ersten Operationskette ausgewählten Operationen sein oder eine Reihenfolge von Operationen der mindestens einen weiteren Operationskette eine Permutation der Reihenfolge der Operationen der ersten Operationskette sein, wobei für jede der Operationen in der mindestens einen weiteren Operationskette eine Parametersteuerung, also eine wiederholte Anwendung der gleichen Operation mit mindestens einem verschiedenen Parameter, erfolgt.

Auch kann bei einer Klassensteuerung die Reihenfolge von Klassen der mindestens einen weiteren Operationskette unabhängig von den in der ersten Operationskette ausgewählten Operationen sein oder eine Reihenfolge von Klassen der mindestens einen weiteren Operationskette eine Permutation der Reihenfolge der Klassen der ersten Operationskette sein, wobei für jede der Operationen aus der jeweiligen Klasse in der mindestens einen weiteren Operationskette eine Parametersteuerung, also eine wiederholte Anwendung der gleichen Operation mit mindestens einem verschiedenen Parameter, erfolgt.

Durch eine Anwendung mehrerer Operationsketten kann in vorteilhafter Weise eine Wahrscheinlichkeit erhöht werden, dass die Operationen einer Operationskette besonders sensitiv bezüglich einer Detektion des gesuchten Bildobjektes sind. Um ein Kriterium für eine optimale Reihenfolge von Operationen zu haben, wird ein vorbestimmtes Bildobjekt gesucht, z.B. ein Tumor innerhalb eines Organs, eines Lymphknotens oder einer Nervenstruktur, oder auch eine ölführende Schicht im Schallbild. Hierzu wird das vorhergehend erläuterte ergebnisabhängige Verfahren vorzugsweise in mehreren Operationsketten angewandt und in einem auf die jeweiligen Operationsketten aufbauenden zweiten und dritten Schritt des Verfahrens untersucht, ob das gesuchte Bildobjekt im Originalbild enthalten ist. Das erfindungsgemäße Verfahren beruht auf einer Anwendung von verschiedenen Operationen, die in einer gewählten Reihenfolge erfolgen und deren Ergebnis ein allgemeines Texturbild ist. Die Reihenfolge von Operationen oder Klassen von Operationen wird, wie vorhergehend erläutert, ergebnisorientiert gesteuert oder durch Permutation erzeugt.

Ein Aufbau von weiteren Operationsketten kann z.B. abgebrochen werden, falls mindestens ein vorbestimmtes Abbruchkriterium erfüllt ist. Beispielsweise kann ein Aufbau von weiteren Operationsketten abgebrochen werden, falls das gesuchte Bildobjekt mit hinreichender Genauigkeit und hinreichender Zuverlässigkeit detektiert wurde. Alternativ oder kumulativ kann der Aufbau weiterer Operationsketten abgebrochen werden, falls eine vorbestimmte Anzahl von Operationsketten überschritten wird.

Nach der Ermittlung und Speicherung der durch die einzelnen Operationsketten erzeugten allgemeinen Texturbilder, insbesondere deren Texturflächen und der zugehörigen Textureigenschaften, kann in einem darauf aufsetzenden Algorithmus das gesamte abgespeicherte Bildmaterial analysiert werden. Hierzu kann z.B. ein Vergleich der jeweiligen allgemeinen Texturbilder und/oder eine Verkupplung der allgemeinen Texturbilder erfolgen, um relevante Größen für eine gesuchte Texturfläche in einem bestimmten Gebiet zu ermitteln oder diese auch auszuschließen. Es wird z.B. gesucht, ob gefundene Gebietseigenschaften und/oder Textureigenschaften gesuchten Gebietseigenschaften oder Textureigenschaften ähnlich sind oder diesen gleichen. Beispielsweise kann analysiert werden, ob ein in diesen größeren Texturflächen liegendes Teilgebiet von den Textureigenschaften der größeren Texturfläche unterschiedliche Textureigenschaften aufweist, was z.B. bedeuten kann, dass Krebszellen in einem Organ vorhanden sind.

Selbstverständlich können auch die für jedes Zwischenbild gespeicherten Ergebnisse der Auswertung analysiert werden.

Die übergeordnete Analyse erfolgt in mehreren Schritten, insbesondere in den als zweiter und dritter Teil des Verfahrens bezeichneten Schritten. Zunächst werden die durch die einzelnen Operationen zur Struktur- und Texturanalyse erzeugten allgemeinen Texturbilder auf die in ihnen enthaltenen Textur- und Strukturinformationen reduziert. Hierbei werden numerische Größen abgeleitet, die die Textur und/oder Struktur über mehrere Ergebnisschritte beschreiben. Diese Größen werden ermittelt aus den Charakteristika aller abgespeicherten isolierten Gebiete im allgemeinen Texturbild, insbesondere der Texturflächen. Diese Charakteristika können, zusammengefasst über mehrere Ergebnisschritte und z.B. in Form von Tabellen, abgespeichert werden. Anschließend werden diese Größen z.B. über eine Listenverarbeitung mittels vergleichender Prozeduren analysiert. Hierzu werden die über mehrere Operationsanwendungen gesammelten Daten wie z.B. Textureigenschaften von Texturflächen, ihren Flächengrößen, ihren Flächenformen und ihrer gegenseitiger Lage zueinander verglichen, beispielsweise indem Einträge in entsprechenden Spalten der Tabelle miteinander verglichen werden. Mittels logischer Verknüpfungen werden Aussagen erzeugt, die ihrerseits über Vergleich der verschiedenen Größen untereinander Aussagen über eine Zugehörigkeit einer Texturfläche zu einer Struktur des gesuchten Bildobjekts liefern.

Beispielsweise können mit Hilfe von Verknüpfungen, z.B. über Fuzzy-Logik, mehrere Eigenschaften zur Entdeckung einer gesuchten Struktur zusammengefasst werden. Ist der so erhaltene Wert (Fuzzy-Wert) größer als eine vorbestimmte Schwelle, z.B. größer als 0,5, dann ist das gesuchte Bildobjekt aufgefunden. Die verschiedenen Prozeduren zur Analyse der abgespeicherten allgemeinen Texturbilder werden sukzessive angewandt und die jeweils vorher erhaltenen Resultate in die nachfolgenden Ermittlungen eingebunden.

Neben den schon aus der Texturanalyse ermittelten Eigenschaften können die Originalbilder auch noch mit Hilfe einer Histogramm-Analyse untersucht werden, z.B. zum Auffinden von lokalen Maxima und der Ausweisung von Grauwertflächen im Originalbild. Auch über andere Methoden der Bildsegmentierung, wie z.B. der Wasserscheidenmethode, können Segmente im Originalbild erzeugt werden. Diese so ausgewiesenen, segmentierten Flächen werden mit den auf Textureigenschaften basierenden segmentierten Flächen verglichen und verknüpft, um somit in vorteilhafter Weise versteckte Möglichkeiten einer Präzisierung von Flächengrenzen zu erhalten. Auf diese Weise kann man z.B. das Organ der Leber in einem Originalbild identifizieren, um dann innerhalb der Leber nach Krebsgebieten mittels Texturanalyse zu suchen.

Bei einer Analyse von einzelnen Strukturen des Originalbildes, insbesondere der in diesem Original bestimmten Texturflächen, ist insbesondere die Frage des Auftretens und der gegenseitigen Zuordnung dieser Strukturen oder Texturflächen in den allgemeinen Texturbildern von Interesse. Im Gegensatz zu "Image Understanding" wird hierbei ein Objekt nicht bezüglich seiner Eigenschaften im Originalbild untersucht. Ein Objekt als solches wird im erfindungsgemäßen Verfahren dargestellt über seine spezifischen Textureigenschaften, Strukturmerkmale und Graustufen. In den Operationsketten können somit z.B. Ergebnisfolgen für Bildteile bzw. Flächen generiert worden sein, die auf verallgemeinerten Verhältnissen der gegenseitigen Lage zueinander und Textureigenschaften basieren (wie vorhergehend erläutert). Ein gesuchter Teil des Originalbildes wird bestimmt durch seine Textur, seine Lage zu anderen Teilen des Bildes, seiner Form der Begrenzung, seiner Form der Fläche und eine Grauwertverteilung der Fläche. Hierbei sind nicht alle genannten Eigenschaften von gleicher Wichtigkeit. An erster Stelle stehen hierbei die Textureigenschaften.

Weiter können in eine Analyse der allgemeinen Texturbilder, die aus den Operationsketten resultieren, auch die vorzugsweise abgespeicherten Größen oder Textureigenschaften der Texturflächen, wie z.B. Zerfranstheit, Schwerpunkt, Richtung des größten Trägheitsmoments usw., einbezogen werden. Hierbei können a priori bekannte Annahmen von den Textureigenschaften, insbesondere vorbekannte Textureigenschaften eines Bildobjekts, als Kriterium benutzt werden, um Entscheidungen zu treffen. Diese a priori Annahmen können z.B. aus bekannten Beispielen, aus denen Textureigenschaften extrahiert wurden, ermittelt werden. Außerdem können vorbekannte Eigenschaften einer Verteilung von Gebieten des gesuchten Bildobjekts in Bildern und/oder einer Einbettung in andere Bildobjekte, z.B. in Gewebegebiete von bestimmten Organen, berücksichtigt werden.

In einer weiteren Ausführungsform werden im dritten Teil des Verfahrens Textureigenschaften einer Texturfläche eines allgemeinen Texturbildes zur Bestimmung eines Ähnlichkeitsmaßes genutzt, wobei das Bildobjekt mit vorbekannten Textureigenschaften detektiert wird, falls das Ähnlichkeitsmaß größer als ein vorbestimmter Schwellwert ist. Dies kann z.B. mittels des vorhergehenden Ansatzes der Fuzzy-Logik erfolgen. Insbesondere kann der vorbestimmte Schwellwert 0,5 sein. Hierdurch ergibt sich in vorteilhafter Weise eine zuverlässige Detektion des gesuchten Bildobjekts.

In einer weiteren Ausführungsform werden im dritten Teil des Verfahrens Textureigenschaften von Texturflächen in mindestens zwei allgemeinen Texturbildern zur Bestimmung eines Ähnlichkeitsmaßes genutzt, wobei das Bildobjekt mit vorbekannten Textureigenschaften detektiert wird, falls das Ähnlichkeitsmaß größer als ein vorbestimmter Schwellwert ist. Hierbei können also die aus verschiedenen Operationsketten resultierenden allgemeinen Texturbilder verglichen oder verknüpft werden, und bezüglich ihrer Ähnlichkeit innerhalb vorgegebener Grenzen untersucht werden.

Für die Bestimmung der Ähnlichkeiten von Texturflächen zweier verschiedener allgemeiner Texturbilder oder Ähnlichkeiten von Textureigenschaften von Texturflächen eines oder mehrerer allgemeiner Texturbilder mit vorbekannten Textureigenschaften können z.B. Abstände, insbesondere eine so genannte Hamming-Distance im Raum von aufgespannten Eigenschaften, benutzt werden. Hierbei werden verschiedene Eigenschaften verglichen. Dieser Vergleich ist komplex, da gleichzeitig mehrere Eigenschaften in ihrer Gesamtheit beurteilt werden müssen. Mathematisch kann ein solcher Vergleich über eine Zuordnung der Eigenschaften der Texturflächen zu Fuzzy-Maßen und Fuzzy-Funktionen erfolgen, die über ein Fuzzy-Integral zusammengefasst und ausgewertet werden. In Anlehnung an dieses mathematische Vorgehen werden Eigenschaften, die eine flächenhafte Bedeutung haben, z.B. eine Flächengröße, in einem so genannten Fuzzy-Maß $\gamma$ zusammengefasst und Textureigenschaften, die eine funktionelle Bedeutung haben, z.B. eine Grauwertverlauf über einer Fläche, in einer so genannten Fuzzy-Funktion $\varphi$ zusammengefasst. Wenn man die vom Maximum der Fuzzy-Maße $\gamma$ absteigend geordneten Fuzzy-Maße mit den vom Minimum von Fuzzy-Funktionen $\varphi$ aufsteigend geordneten Fuzzy-Funktionen multipliziert, dann erhält man eine Folge von Werten (Fuzzy-Integral). Die so erhaltenen Werte ordnet man vom Maximum absteigend und hat so eine Aussage über die bedeutenden Textureigenschaften in abfallender Bedeutung. Wenn man sich für das Auffinden der gesuchten Textureigenschaft interessiert, so kann man bei der Auswahl der Beiträge zu den Fuzzy-Maßen $\gamma$ und zu den Fuzzy-Funktionen $\varphi$ auf jene beschränken, die a priori für das gesuchte Bildobjekt in Frage kommen. Wenn man z.B. einen Tumor in der Leber sucht, so können in den Fuzzy-Maßen $\gamma$ alle Strukturelemente und Grauwertbereiche gesammelt werden, die die Leber beschreiben. In den Fuzzy-Funktionen $\varphi$ können alle Textureigenschaften gesammelt werden, die einen Tumor beschreiben. Ein hoher Wert des Fuzzy-Integrals beschreibt dann Krebszellen, die gleichzeitig zur Leber gehören. Sind die Textureigenschaften besonders charakteristisch, gehört die zugehörige Fläche aber nicht zur Leber, dann ergibt das beschriebene Vorgehen einen Wert nahe 0, da das Fuzzy-Maß $\gamma$ annähernd 0 ist. Sind die Werte des Fuzzy-Maßes $\gamma$ der Leber zuzuordnen und sind die gesuchten Textureigenschaften des abgebildeten Tumors nahezu nicht vorhanden, so ergibt das Produkt ebenfalls annähernd 0. Ist der Wert aber verschieden von 0, dann werden die Ergebnisse besonders erfolgreich einen Tumor beschreiben, der in der Leber liegt. Dies kann z.B. der Fall sein, wenn trotz eines kleinen Flächenstückes (kleines Fuzzy-Maß) eine bedeutende Textureigenschaft (große Fuzzy-Funktion) vorliegt oder ein großes Flächenstück (großes Fuzzy-Maß) mit einer weniger bedeutenden Textureigenschaft (kleine Fuzzy-Funktion) verknüpft wird. Geht man dieses Vorgehen über alle Werte des Fuzzy-Maßes $\gamma$ und der Fuzzy-Funktion $\varphi$ durch, so kann man das Gebiet des gesuchten Tumors in seinen Grenzen bestimmen. Neben der Bestimmung eines Maximums des Fuzzy-Integrals, d.h. der Defuzzyfizierung, wird über die Angleichung mit einer Gaußfunktion die Abweichung von dem ermittelten Wert bestimmt und abgespeichert.

Hierbei ist zu beachten, dass das erfindungsgemäße Verfahren abhängig von dem gesuchten Bildobjekt, insbesondere von dessen Textureigenschaften, ist und vorzugsweise an vorbekannte Eigenschaften des Bildobjekts angepasst werden kann. Hierfür können a priori bekannte Eigenschaften des gesuchten Bildobjekts also bei der Auswahl von analysierten Eigenschaften, insbesondere auch bei der Auswahl von Operationen und den zu analysierenden Textureigenschaften, verwendet werden. So sind z.B. Krebsgeschwüre im Allgemeinen nicht in viele kleine Gebiete aufgeteilt, wenn es sich nicht gerade um befallene Lymphknoten im Halsbereich handelt. Tumore an Nervenknoten haben meist eine kugelförmige Gestalt, d.h. das maximale und minimale Trägheitsmoment einer diese Tumore abbildenden Bildfläche des Originalbildes unterscheiden sich nicht wesentlich. Auch eine Größenordnung von Flächen kann ein Indiz dafür sein, ob es sich z.B. um eine Nervenzelle handelt. Eine Einbettung von Flächen gleicher Textur in größere Flächen anderer Textur spielt beim Auffinden von Tumorregionen ebenfalls eine Rolle, da Tumorzellen bei einer Person meist nur in einem Organ, einer Gewebeart oder einer Funktionseinheit des Körpers, z.B. die Muskeln bei einem Sarkom, die Nerven bei einem Neurinom oder Lymphknoten, vorkommen.

Ist das gesuchte Bildobjekt z.B. eine Zyste, so kann man im Inneren des diese Zyste abbildenden Teils des Originalbildes eine gleichförmige, also nicht wesentlich strukturierte, Textur erwarten. In dieser Weise können also Bildobjekte über Texturen, Größe und angrenzende Texturen charakterisiert werden. Bei Krebsgebieten sind Flächenbegrenzungen oft glatt und nicht ausgefranst wie bei Nerven. Insbesondere können auch Vergleiche mit bekannten Ergebnissen als Maß herangezogen werden, indem das Ähnlichkeitsmaß zwischen dem Beispiel und dem zu untersuchenden Glied als Kriterium benutzt wird.

Neben einer Betrachtung einzelner Bilder, d.h. nur in einer Bildebene, können auch die räumlich benachbarten Bilder betrachtet werden, so dass dreidimensionale Verhältnisse in die Betrachtung einfließen. Hierdurch kann über eine Fortsetzung einer Textur in der dritten Dimension eine vorher erhaltene Textur validiert werden. Bei z.B. CT- und MRT-Bildern sind diese räumlichen Schnittbilder in den benachbarten Pixelpunkten leicht zu erzeugen. Sie können an einem Pixel des CT- oder MRT-Bildes Schnittebenen in verschiedenen Richtungen aus dem durch das CT- oder MRT-Verfahren erzeugten räumlichen Bild in einfacher Weise generiert werden. Die Erweiterung des erfindungsgemäßen Verfahrens in die dritte Dimension ist effektiv für das Auffinden eines gesuchten Bildobjekts in Schichtbildern, da das Bildobjekt meist über mehrere Bildschichten des Schichtbildes sich erstrecken kann und somit auch in diesen verschiedenen Bildschichten gleiche oder ähnliche Textureigenschaften haben wird. Weiter kann somit in vorteilhafter Weise eine räumliche Ausdehnung des gesuchten Bildobjektes bestimmt werden.

Das erfindungsgemäße Verfahren wurde vorhergehend im Speziellen für die medizinische Bildverarbeitung beschrieben. Es ist aber keinesfalls nur auf diese Disziplin der Bildverarbeitung anwendbar. Das erfindungsgemäße Verfahren kann insbesondere überall dort angewendet werden, wo Textureigenschaften eine wesentliche Rolle spielen und diese Textureigenschaften über Messsysteme Bilder erzeugen. Die Bilder können z.B. durch Einstrahlung, Wellen oder Anregung von elementaren Teilen im Untersuchungsobjekt über starke äußere Felder oder die Erzeugung der elektroakustischen Emission durch Druck auf Materialien mit kristalliner Struktur erzeugt werden. Als einstrahlende Messmöglichkeiten gibt es Schallwellen, Ultraschall, Röntgenstrahlen, Photonenstrahlung, Elektronenstrahlung, Partikelstrahlung, Laserstrahlung und Anregung der Spins, welche über Radiowellen in einem sehr starken Magnetfeld erzeugt werden. Beispiele für Anwendungen sind neben der medizinischen Diagnostik die Materialprüfung mit Ultraschall, das Auffinden von Ölschichten durch seismische Messungen oder das Auffinden von Materialüberlastungen in Metallen (elektro-akustische Emission). Die Ergebnisse der automatischen Auswertungen sind allgemein entstanden über Analysen, die auf einer großen Menge von a priori Informationen basieren. Bei einer Beurteilung von medizinischen Bildern möchte z.B. ein Röntgenarzt wegen einer Tragweite seiner Entscheidung meist eine Entscheidungsfindung nachvollziehen. Es ist daher wichtig, dass die einzelnen Entscheidungsschritte auch wiederholt bildlich verfolgt werden können.

Hierzu ermöglicht das erfindungsgemäße Verfahren in vorteilhafter Weise, mittels der abgespeicherten Reihenfolge von Operationen und deren Parametern, die Zwischenbilder, das allgemeine Texturbild sowie das Endresultat anschaulich auf dem Monitor darzustellen. Auch können die Bilder überlagert werden, um eine Generierung des interessierenden Objekts in einer Bewegung zu verfolgen. Hierbei können dann auch Schritte, die das Ergebnis abschwächen, ausgeblendet werden.

Selbstverständlich ist auch eine Einfärbung von Strukturen vorstellbar, die über unterschiedliche Grauwerte dargestellt werden. Hierbei können insbesondere Texturflächen durch Darstellung in Falschfarbenbildern aufgefunden werden. Die entsprechenden Farben, die besonders ins Auge stechen, können durch den Fachmann mittels einfacher Versuche gefunden werden.

Neben dem Auffinden von gesuchten Bildobjekten ist auch eine automatische Auswertung von Interesse, um ein Screening von medizinischen Bildern durchführen zu können oder auch eine Aussage zu erhalten, die unabhängig von beurteilten Personen sind. So können z.B. erhaltene Ergebnisse während eines Krankheitsverlaufs dokumentiert werden, z.B. die Änderung einer Größe eines Tumors.

Für eine Ausgabe der während des Verfahrens erzeugten Bilder ist es vorteilhaft, gut detektierte Regionen (z.B. Knochen), die in der Nähe eines gesuchten Bildobjektes sind, mit im Bild auszugeben, um eine eindeutige örtliche Zuordnung zu haben. Da bei einer Isolierung von Regionen mit gesuchten Textureigenschaften auch Fuzzy-Logik angewandt wurde, kann auch noch eine Zuverlässigkeit einer Entscheidung dargestellt werden. Dies ist z.B. möglich über eine Farbsättigung oder Grauwerthöhe bei der Darstellung des gesuchten Gebietes.

Weiter vorgeschlagen wird eine Vorrichtung zur Detektion mindestens eines Bildobjekts mit vorbekannten Textureigenschaften in einem Originalbild, wobei die Vorrichtung mindestens eine Auswerteeinheit umfasst. Mittels der Auswerteeinheit ist in vorteilhafter Weise eines der vorhergehend erläuterten Verfahren durchführbar. Weiter kann die Vorrichtung mindestens eine Speichereinheit umfassen, mittels derer die vorhergehend erwähnten Eigenschaften von Zwischenbildern oder allgemeinen Texturbildern speicherbar sind.

Die Erfindung wird anhand eines Ausführungsbeispiels näher erläutert. Die Fig. zeigen:

Fig. 1      eine schematische Darstellung einer Reihenfolge von Operationen,

Fig. 2      eine schematische Darstellung einer Ermittlung von Texturen,

Fig. 3      eine schematische Darstellung einer Erzeugung eines allgemeinen Texturbildes,

Fig. 4      eine schematische Darstellung der Ermittlung eines Ähnlichkeitsmaßes,

Fig. 5      eine schematische Darstellung einer Detektion eines Bildobjekts und

Fig. 6      eine schematische Darstellung einer ergebnisabhängigen Steuerung.

Nachfolgend bezeichnen gleiche Bezugszeichen Elemente mit gleichen oder ähnlichen technischen Eigenschaften.

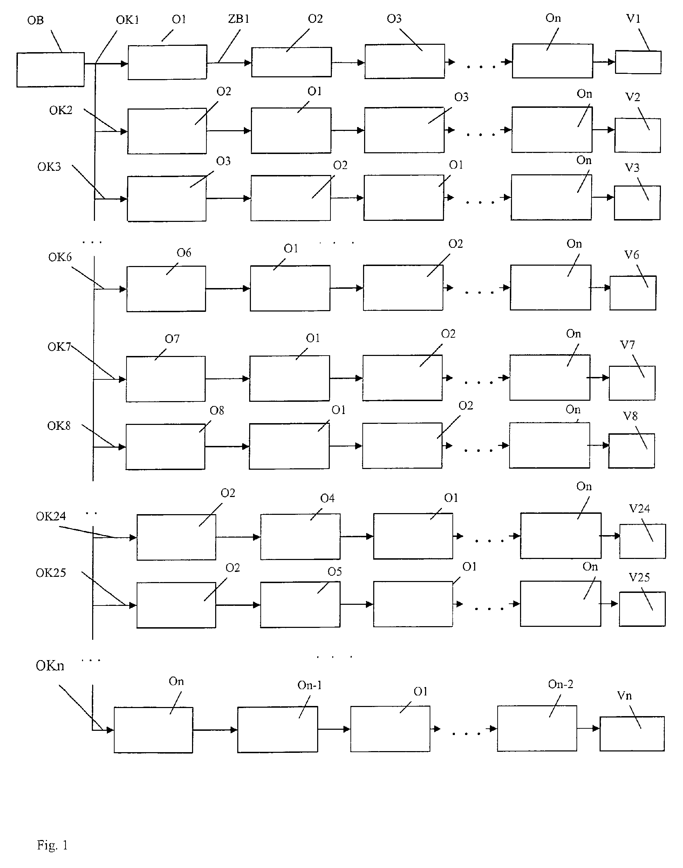

In Fig. 1 ist eine schematische Reihenfolge von Operationen dargestellt, wobei hier n Operationsketten OK1, OK2, ... OKn dargestellt sind, die jeweils Operationen aus einer Anzahl von Operationen 01, 02, ... On umfassen. Als Ausgangsbild dient hierbei ein Originalbild OB. Stellvertretend für alle weiteren Operationsketten OK2, OK3, ...OKn wird hierbei nur die erste Operationskette OK1 erläutert. In der ersten Operationskette OK1 wird auf das Originalbild OB eine erste Operation 01 angewendet. Hierbei wird ein erstes Zwischenbild ZB1 der ersten Operationskette erzeugt. Weiter wird eine zweite Operation 02, eine dritte Operation 03, weitere Operationen und abschließend eine n-te Operation On angewendet. Das letzte resultierende Zwischenbild der ersten Operationskette OK1 wird hierbei als V1 bezeichnet. Auch in den weiteren Operationsketten OK2, OK3, ... OKn werden Operationen aus einer Anzahl von Operationen 01, 02, ... On auf das Originalbild OB angewendet. Hierbei unterscheidet sich jedoch zumindest eine Anzahl von Operationen 01, 02, ... On und/oder eine Reihenfolge von Operationen 01, 02, ... On zwischen den einzelnen Operationsketten OK1, OK2, ... OKn. Exemplarisch ist hierbei dargestellt, dass in der zweiten Operationskette OK2 auf das Originalbild erst die Operation 02, dann die Operation 03 und dann die Operation 01 angewendet wird. Abschließend wird in der zweiten Operationskette OK2 die Operation On angewendet, wodurch das letzte resultierende Zwischenbild V2 der zweiten Operationskette OK2 entsteht. In gleicher Weise entstehen resultierende Zwischenbilder V3, ... Vn der weiteren Operationsketten OK3, ... Okn.

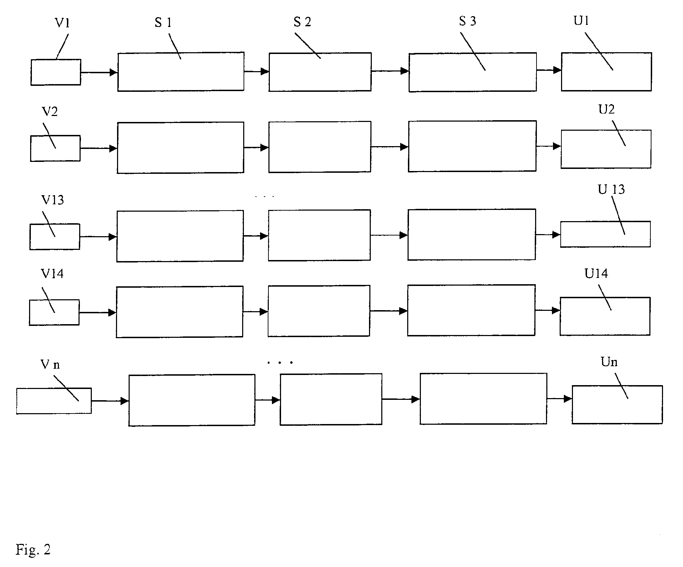

In Fig. 2 ist schematisch eine Zusammenfassung von Flächen mit gleichen oder ähnlichen Textureigenschaften (Texturflächen) in den resultierenden Zwischenbildern V1, V2, ... Vn der Operationsketten OK1, OK2, ... OKn dargestellt. Hierbei wird wiederum exemplarisch eine Zusammenfassung von Texturflächen im ersten resultierenden Zwischenbild V1 beschrieben. In einem ersten Schritt S1 werden Flächen mit gleichen oder ähnlichen vorbestimmten Textureigenschaften (Texturflächen) bestimmt. In einem zweiten Schritt S2 wird eine Analyse der bestimmten Texturflächen im resultierenden Zwischenbild V1, z.B. hinsichtlich Größe, Größe einer Umrandung, Schwerpunkt etc. durchgeführt. Anschließend wird in einem dritten Teilschritt S3 eine räumliche Beziehung von Teilflächen einer Texturfläche untereinander oder von Texturflächen zueinander analysiert. Resultierend wird ein Bild U1 erzeugt, in welchem Texturflächen bestimmt sind sowie die zugehörigen in den Schritten S2, S3 ermittelten Textureigenschaften abgespeichert wurden.

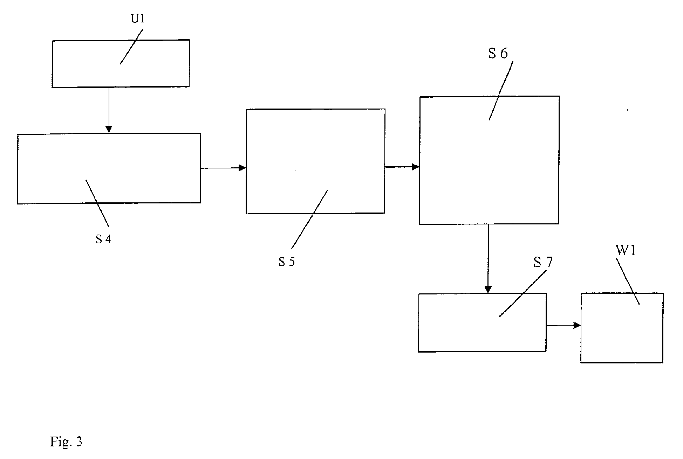

In Fig. 3 ist schematisch die Erzeugung eines allgemeinen Texturbildes dargestellt. Als Eingang dient hierbei das aus dem resultierenden Zwischenbild V1 erzeugte Bild U1, in welchem verschiedene Texturflächen bestimmt sind. In einem vierten Schritt S4 wird hierbei den verschiedenen Texturflächen jeweils ein vorbestimmter Grauwert zugeordnet. Dies erfolgt beispielsweise indem Textureigenschaften innerhalb eines Intervalls mit einem vorbestimmten Grauwert gekennzeichnet werden. In einem fünften Schritt S5 werden alle Pixel mit einem vorbestimmten Grauwert in einer geschlossenen Fläche zusammengefasst, wobei der geschlossenen Fläche auch der Fläche benachbarte, isolierte Punkte zugewiesen werden. In einem sechsten Schritt S6 werden die derart mit einem einheitlichen Grauwert gekennzeichneten Flächen hinsichtlich ihrer Größe, ihres Umfangs, ihrer Lage und ihrer Textureigenschaften geordnet, wobei die vorgenannten Charakteristika beispielsweise in Form von Listen oder Tabellen abgespeichert werden können, um einen späteren Vergleich zu vereinfachen. In einem siebten Schritt S7 werden die derart detektierten Flächen mit verschiedenen Labels gekennzeichnet. Ausgegeben wird ein resultierendes Texturbild W1.

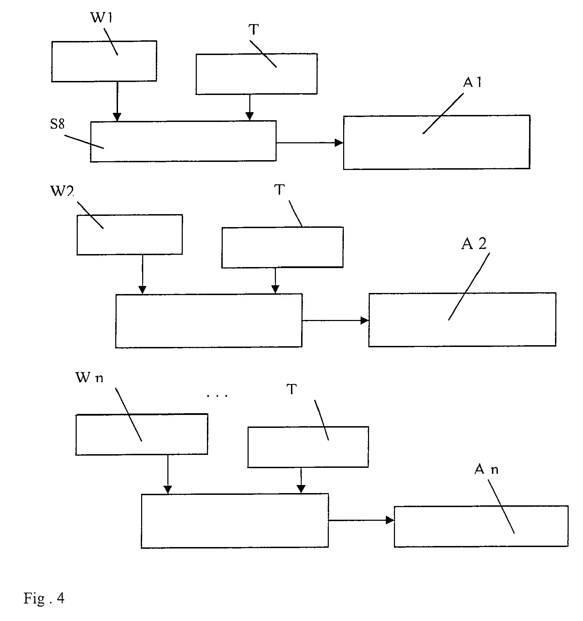

In Fig. 4 ist schematisch die Ermittlung eines Ähnlichkeitsmaßes dargestellt. Als Eingangsbilder dienen hierbei die allgemeinen Texturbilder W1, W2, ... Wn. Hierbei werden in einem achten Schritt S8 Textureigenschaften der allgemeinen Texturbilder W1, W2, ... Wn, insbesondere von in den allgemeinen Texturbildern W1, W2, ..., Wn codierten Texturflächen, mit Textureigenschaften T des gesuchten Bildobjekts verglichen. Dies kann z.B. mittels der vorhergehend erläuterten Methode der Fuzzy-Logik durchgeführt werden. Hierbei werden Ähnlichkeitsmaße A1, A2, ... An erzeugt. Die Ähnlichkeitsmaße A1, A2, ... An bezeichnen hierbei ein Maß der Übereinstimmung von Textureigenschaften der in den allgemeinen Texturbildern W1, W2, ... Wn enthaltenen Texturflächen mit Textureigenschaften einer Textur des gesuchten Bildobjekts.

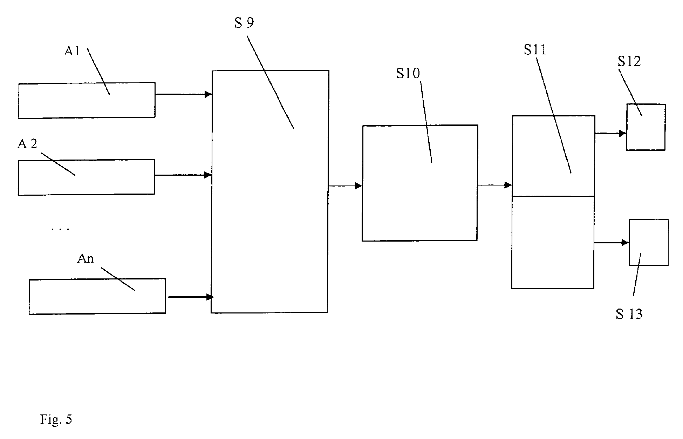

In Fig. 5 ist schematisch die endgültige Detektion des gesuchten Bildobjektes dargestellt. Hierbei werden die Ähnlichkeitsmaße A1, A2, ... An in einem neunten Schritt S9 zusammengefasst, nummeriert und ihrer Größe nach geordnet. In einem zehnten Schritt erfolgt eine Neu- oder Umordnung der Verteilung der Ähnlichkeitsmaße A1, A2, ... An um ein Maximum der Ähnlichkeitsmaße A1, A2, ... An sowie ein Vergleich mit einer Gaußkurve oder ähnlichen Wahrscheinlichkeitsverteilungen, wie Laplace-Verteilung, Cauchy-Verteilung oder Studentsche t-Verteilung, um die Entscheidung zu treffen. Wird in einem elften Schritt S11 ein eindeutiges Maximum detektiert, so wird in einem zwölften Schritt S12 ausgegeben, dass das gesuchte Bildobjekt gefunden wurde. Andernfalls wird in einem dreizehnten Schritt S13 ausgegeben, dass das gesuchte Bildobjekt nicht im Originalbild BO vorhanden ist.

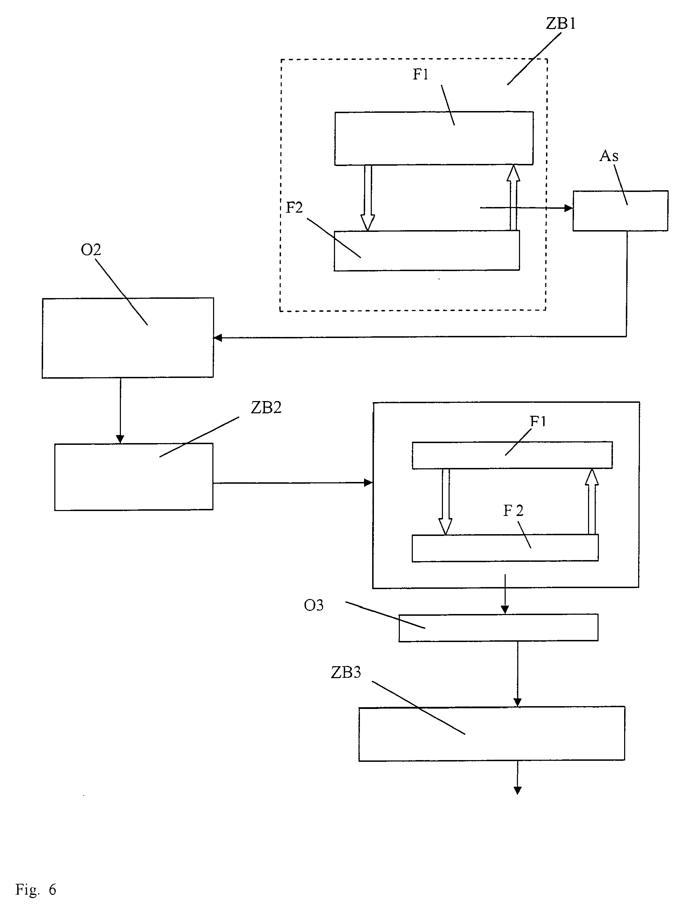

Im Fig. 6 ist eine schematische Darstellung einer ergebnisabhängigen Steuerung abgebildet. Hierbei erfolgt die Auswahl einer folgenden Operation, beispielsweise der in Fig. 2 dargestellten Operation 02 der ersten Prozesskette OK1, in einem Auswahlschritt AS, wobei die Auswahl in Abhängigkeit einer Beziehung einer ersten Fläche F1 zu einer zweiten Fläche F2 des ersten Zwischenbildes ZB1 erfolgt. Eine Beziehung wird beispielsweise als geometrischer Abstand zwischen Schwerpunkten der Flächen F1, F2, einer Differenz zwischen Trägheitsmomenten der Flächen F1, F2, einer Differenz zwischen einem Umfang der Flächen F1, F2 und/oder einer Differenz einer Größe der Flächen F1, F2 ausgewertet. Die Flächen F1, F2 können hierbei z.B. zwei verschiedene Texturflächen sein. Aus einer Anwendung der im Auswahlschritt AS ausgewählten Operation 02, resultiert ein zweites Zwischenbild ZB2, welches veränderte Textureigenschaften aufweist. Insbesondere auch die Flächen F1, F2 weisen veränderte Textureigenschaften auf. Hiernach wird erneut eine Beziehung der nun veränderten Flächen F1, F2 analysiert und in Abhängigkeit der Beziehung eine dritte Operation 03 ausgewählt, aus deren Anwendung ein drittes Zwischenbild ZB3 resultiert.

Bezugszeichenliste

OB      Originalbild

OK1     erste Operationskette

0K2     zweite Operationskette

OK3     dritte Operationskette

OK6     sechste Operationskette

| OK7 | siebte Operationskette |
|---|---|
| OK8 | achte Operationskette |
| OK24 | vierundzwanzigste Operationskette |
| OK25 | fünfundzwanzigste Operationskette |
| OKn | n-te Operationskette |
| 01 | erste Operation |
| 02 | zweite Operation |
| 03 | dritte Operation |
| On | n-te Operation |
| V1 | resultierendes Zwischenbild der ersten Operationskette |
| V2 | resultierendes Zwischenbild der zweiten Operationskette |
| V3 | resultierendes Zwischenbild der dritten Operationskette |
| V6 | resultierendes Zwischenbild der sechsten Operationskette |
| V7 | resultierendes Zwischenbild der siebten Operationskette |
| V8 | resultierendes Zwischenbild der achten Operationskette |
| V13 | resultierendes Zwischenbild der dreizehnten Operationskette |
| V14 | resultierendes Zwischenbild der vierzehnten Operationskette |
| V24 | resultierendes Zwischenbild der vierundzwanzigsten Operationskette |
| V25 | resultierendes Zwischenbild der fünfundzwanzigsten Operationskette |
| Vn | resultierendes Zwischenbild der n-ten Operationskette |
| S1 | erster Schritt |
| S2 | zweiter Schritt |
| S3 | dritter Schritt |
| S4 | vierter Schritt |
| S5 | fünfter Schritt |
| S6 | sechster Schritt |
| S7 | siebter Schritt |
| S8 | achter Schritt |
| S9 | neunter Schritt |

| | |
|---|---|
| S10 | zehnter Schritt |
| S11 | elfter Schritt |
| S12 | zwölfter Schritt |
| S13 | dreizehnter Schritt |
| U1 | Bild |
| U2 | Bild |
| U13 | Bild |
| U14 | Bild |
| Un | Bild |
| W1 | resultierendes Texturbild der ersten Operationskette |
| W2 | resultierendes Texturbild der zweiten Operationskette |
| Wn | resultierendes Texturbild der n-ten Operationskette |
| T | Bild mit vorbekanntenTextureigenschaften |
| A1 | Ähnlichkeitsmaß |
| A2 | Ähnlichkeitsmaß |
| An | Ähnlichkeitsmaß |
| F1 | erste Fläche |
| F2 | zweite Fläche |
| ZB1 | ersten Zwischenbild |
| ZB2 | zweites Zwischenbild |
| ZB3 | drittes Zwischenbild |

**Patentansprüche**

1. Verfahren zur Detektion mindestens eines Bildobjekts mit vorbekannten Textureigenschaften in einem Originalbild (OB), wobei auf das Originalbild (OB) in einem ersten Teil des Verfahrens in einer ersten Operationskette (OK1) eine erste Operation (O1) und mindestens eine weitere Operation angewendet wird, wobei die mindestens eine weitere Operation von der ersten Operation (O1) verschieden ist, wobei nach jeder Operation (O1, O2, O3,..., On) ein Zwischenbild (ZB1, ZB2, ZB3) erzeugt wird, wobei die mindestens eine weitere Operation aus einer Menge von mindestens zwei verschiedenen Operationen ausgewählt wird, wobei die Auswahl der mindestens einen weiteren Operation in Abhängigkeit einer Auswertung mindestens eines der bereits erzeugten Zwischenbilder (ZB1, ZB2, ZB3) und/oder des Originalbildes (OB) erfolgt, wobei die Anwendung von weiteren Operationen abgebrochen wird, falls mindestens ein vorbestimmtes Abbruchkriterium erfüllt ist, wobei in einem zweiten Teil des Verfahrens ein allgemeines Texturbild (W1, W2, ..., Wn) aus dem zuletzt erzeugten Zwischenbild (V1) erzeugt wird, indem mindestens eine Texturfläche des zuletzt erzeugten Zwischenbildes (V1) bestimmt wird, wobei Textureigenschaften des zuletzt bestimmten Zwischenbilds (V1) bestimmt werden, wobei der mindestens einen Texturfläche ein Teil oder Teile des zuletzt bestimmten Zwischenbildes (V1) zugeordnet werden, der oder die gleiche oder ähnliche Textureigenschaften aufweisen,
wobei in einem dritten Teil des Verfahrens Textureigenschaften der mindestens einen Texturfläche mit vorbekannten Textureigenschaften verglichen werden, wobei das Bildobjekt mit vorbekannten Textureigenschaften detektiert wird, falls Textureigenschaften von der mindestens einen Texturfläche gleich oder ähnlich den vorbekannten Textureigenschaften sind.

2. Verfahren nach Anspruch 1, **dadurch gekennzeichnet, dass** im zweiten Teil des Verfahrens ein allgemeines Texturbild (W1, W2, ..., Wn) aus einer vorbestimmten Anzahl oder allen Zwischenbildern (ZB1, ZB2, ZB3, V1) erzeugt wird, indem für die vorbestimmte Anzahl oder alle Zwischenbilder (ZB1, ZB2, ZB3, V1) jeweils mindestens eine Texturfläche bestimmt wird, wobei der jeweiligen Texturfläche ein Teil oder Teile des jeweiligen Zwischenbildes (ZB1, ZB2, ZB3, V1) zugeordnet werden, der oder die gleich oder ähnliche Textureigenschaften aufweisen, wobei Textureigenschaften dieser Texturflächen bestimmt und verknüpft werden, wobei in dem dritten Teil des Verfahrens die verknüpften Textureigenschaften mit den vorbekannten Textureigenschaften verglichen werden, wobei das Bildobjekt mit vorbekannten Textureigenschaften detektiert wird, falls die verknüpften Textureigenschaften gleich oder ähnlich den vorbekannten Textureigenschaften sind.

3. Verfahren nach Anspruch 1 oder 2, **dadurch gekennzeichnet, dass** die Auswahl einer Operation (01, 02, 03, ..., On) in Abhängigkeit mindestens eines Unterschiedes zwischen einer Auswertung eines bereits erzeugten Zwischenbildes (ZB1, ZB2, ZB3) und eines weiteren bereits erzeugten Zwischenbildes (ZB1, ZB2, ZB3) oder einer Auswertung eines bereits erzeugten Zwischenbildes (ZB1, ZB2, ZB3) und des Originalbildes (OB) erfolgt.

4. Verfahren nach einem der Ansprüche 1 bis 3, **dadurch gekennzeichnet, dass** zumindest ein Teil einer Reihenfolge von Operationen (01, 02, 03, ..., On) aus einer Parametersteuerung resultiert.

5. Verfahren nach Ansprüche 1 bis 4, **dadurch gekennzeichnet, dass** zumindest ein Teil der Reihenfolge von Operationen (01, 02, 03, ..., On) aus einer Operationssteuerung oder einer Klassensteuerung resultiert.

6. Verfahren nach Anspruch 5, **dadurch gekennzeichnet, dass** eine Operationssteuerung oder eine Klassensteuerung in Abhängigkeit einer Höhe einer Änderung zwischen dem aktuellen Zwischenbild und dem aus der Anwendung einer verfügbaren Operation resultierenden Zwischenbild erfolgt.

7. Verfahren nach Anspruch 5 oder 6, **dadurch gekennzeichnet, dass** Operationen (01, 02, 03, ..., On) einer Mehrzahl von Klassen zugeordnet sind, wobei die Auswahl einer Operation (01, 02, 03, ..., On) zusätzlich in Abhängigkeit einer klassenspezifischen Anwendungshäufigkeit erfolgt, wobei die klassenspezifische Anwendungshäufigkeit eine Anwendungshäufigkeit von Operationen (01, 02, 03, ..., On) einer Klasse bezeichnet und/oder wobei die Auswahl einer Operation (01, 02, 03, ..., On) zusätzlich in Abhängigkeit einer vorbestimmten Rangordnung von Klassen und/oder Prozeduren erfolgt.

8. Verfahren nach einem der vorangegangenen Ansprüche, **dadurch gekennzeichnet, dass** die Auswahl einer Operation (01, 02, 03, ..., On) oder einer Klasse von Operationen (01, 02, 03, ..., On) zusätzlich in Abhängigkeit von Textureigenschaften mindestens einer Texturfläche mindestens eines der bereits erzeugten Zwischenbilder (ZB1, ZB2, ZB3) und/oder des Originalbildes (OB) erfolgt.

9. Verfahren nach Anspruch 8, **dadurch gekennzeichnet, dass** die Auswahl einer Operation (01, 02, 03, ..., On) oder einer Klasse von Operationen (01, 02, 03, ..., On) in Abhängigkeit eines Unterschiedes zwischen Textureigenschaften von mindestens einer Texturfläche mindestens eines der bereits erzeugten Zwischenbilder (ZB1, ZB2, ZB3) und/oder des Originalbildes (OB) und vorbekannten Textureigenschaften erfolgt.

10. Verfahren nach einem der vorangegangenen Ansprüche, **dadurch gekennzeichnet, dass** im ersten Teil des Verfahrens in mindestens einer weiteren Operationskette (OK2, OK3,...,OKn) mindestens zwei verschiedene Operationen (01, 02, 03, ..., On) auf das Originalbild (OB) angewendet werden, wobei in einem zweiten Teil des Verfahrens ein allgemeines Texturbild aus dem zuletzt erzeugten Zwischenbild (V2, V3, ..., Vn) der mindestens einen weiteren Operationskette (OK2, OK3,...,OKn) erzeugt wird, indem mindestens eine Texturfläche des zuletzt erzeugten Zwischenbildes (V2, V3, ..., Vn) der mindestens einen weiteren Operationskette (OK2, OK3,...,OKn) bestimmt wird, wobei Textureigenschaften des zuletzt bestimmten Zwischenbilds (V2, V3, ..., Vn) der mindestens einen weiteren Operationskette (OK2, OK3,...,OKn) bestimmt werden, wobei der mindestens einen Texturfläche ein Teil oder Teile des zuletzt bestimmten Zwischenbildes (V2, V3, ..., Vn) der mindestens einen weiteren Operationskette (OK2, OK3,...,OKn) zugeordnet werden, der oder die gleiche oder ähnliche Textureigenschaften aufweisen, wobei in einem dritten Teil des Verfahrens Textureigenschaften der mindestens einen Texturfläche mit vorbekannten Textureigenschaften verglichen werden, wobei das Bildobjekt mit vorbekannten Textureigenschaften detektiert wird, falls Textureigenschaften der mindestens einen Texturfläche gleich oder ähnlich den vorbekannten Textureigenschaften sind.

11. Verfahren nach Anspruch 10, **dadurch gekennzeichnet, dass** eine Anzahl von Operationen (01, 02, 03, ...,On) der mindestens einen weiteren Operationskette (OK2, OK3,...,OKn) ungleich einer Anzahl von Operationen (01, 02, 03, ...,On) der ersten Operationskette (OK1) ist, wobei eine Reihenfolge von Operationen (01, 02, 03, ...,On) der mindestens einen weiteren Operationskette (OK2, OK3,...,OKn) unabhängig von den in der ersten Operationskette (OK1) ausgewählten Operationen (01, 02, 03, ...,On) ist oder eine Anzahl von Operationen (01, 02, 03, ...,On) der mindestens einen weiteren Operationskette (OK2, OK3,...,OKn) gleich einer Anzahl von Operationen (01, 02, 03, ...,On) der ersten Operationskette (OK1) ist, wobei eine Reihenfolge von Operationen (01, 02, 03, ...,On) der mindestens einen weiteren Operationskette (OK2, OK3,...,OKn) unabhängig von den in der ersten Operationskette (OK1) ausgewählten Operationen (01, 02, 03, ...,On) ist oder eine Reihenfolge von Operationen (01, 02, 03, ...,On) der mindestens einen weiteren Operationskette (OK2, OK3,...,OKn) eine Permutation der Reihenfolge der Operationen (01, 02, 03, ...,On) der ersten Operationskette (OK1) ist.

12. Verfahren nach einem der vorangegangenen Ansprüche, **dadurch gekennzeichnet, dass** im dritten Teil des Verfahrens Textureigenschaften mindestens einer Texturfläche eines allgemeinen Texturbildes zur Bestimmung eines Ähnlichkeitsmaßes genutzt werden, wobei das Bildobjekt mit vorbekannten Textureigenschaften detektiert wird, falls das mindestens eine Ähnlichkeitsmaß größer als ein vorbestimmter Schwellwert ist.

13. Verfahren nach einem der Ansprüche 10 bis 12, **dadurch gekennzeichnet, dass** im dritten Teil des Verfahrens Textureigenschaften von Texturflächen von mindestens zwei allgemeinen Texturbildern zur Bestimmung mindestens eines Ähnlichkeitsmaßes (A1, A2, ..., An) genutzt werden, wobei das Bildobjekt mit vorbekannten Textureigenschaften detektiert wird, falls das mindestens eine Ähnlichkeitsmaß (A1, A2,..., An) größer als ein vorbestimmter Schwellwert ist.

14. Vorrichtung zur Detektion mindestens eines Bildobjekts mit vorbekannten Textureigenschaften in einem Originalbild (OB), wobei die Vorrichtung mindestens eine Auswerteeinheit umfasst, wobei mittels der Auswerteeinheit auf das Originalbild (OB) in einem ersten Teil des Verfahrens in einer ersten Operationskette (OK1) eine erste und mindestens eine weitere Operation (01, 02, 03,..., On) anwendbar ist, wobei die mindestens eine weitere Operation von der ersten Operation (O1) verschieden ist, wobei nach jeder Operation (01, 02, 03,..., On) ein Zwischenbild (ZB1, ZB2, ZB3) erzeugt wird, wobei die mindestens eine weitere Operation aus einer Menge von mindestens zwei verschiedenen Operationen auswählbar ist, wobei die Auswahl der mindestens einen weiteren Operation in Abhängigkeit einer Auswertung mindestens eines der bereits erzeugten Zwischenbilder (ZB1, ZB2, ZB3) und/oder des Originalbildes (OB) erfolgt, wobei die Anwendung von weiteren Operationen abgebrochen wird, falls mindestens ein vorbestimmtes Abbruchkriterium erfüllt ist, wobei in einem zweiten Teil des Verfahrens mittels der Auswerteeinheit ein allgemeines Texturbild (W1) aus dem zuletzt erzeugten Zwischenbild (V1) erzeugbar ist, indem mindestens eine Texturfläche des zuletzt erzeugten Zwischenbildes (V1) bestimmt wird, wobei Textureigenschaften des zuletzt bestimmten Zwischenbilds (V1) bestimmt werden, wobei der mindestens einen Texturfläche ein Teil oder Teile des zuletzt bestimmten Zwischenbildes (V1) zugeordnet werden, der oder die gleiche oder ähnliche Textureigenschaften aufweisen, wobei in einem dritten Teil des Verfahrens mittels der Auswerteeinheit Textureigenschaften der mindestens einen Texturfläche mit vorbekannten Textureigenschaften vergleichbar sind, wobei das Bildobjekt mit vorbekannten Textureigenschaften detektierbar ist, falls Textureigenschaften von der mindestens einen Texturfläche gleich oder ähnlich den vorbekannten Textureigenschaften sind.

Fig. 1

Fig. 2

Fig. 3

Fig . 4

S 9

A 1

A 2

. . .

An

S10

S11

S12

S13

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **PAOLO ARENA ; ADRIANO BASILE ; MAIDE BUCOLO ; LUIGI FORTUNA.** Image processing for medical diagnosis using CNN. *Nuclear Instruments and Methods in Physics Research A,* 2003, vol. 497, 174-178

- **SAMUEL W. K. CHAN ; K. S. LEUNG ; W. S. FELIX WONG.** An expert system for the detection of cervical cancer cells using knowledge-based image analyzer. *Artificial Intelligence in Medicine,* 1996, vol. 8, 67-90
- **L. L. CALDEIRA ; P. ALMEIDA ; J. SEABRA.** New Evidences on Automatic Tumour Segmentation in Magnetic Resonance Brain Images. *IFMBE Proceedings 25/IV,* 2009, 1190-1193